(19) Europäisches Patentamt
European Patent Office
Office européen des brevets

(11) EP 1 170 339 A2

(12) # EUROPEAN PATENT APPLICATION

(43) Date of publication:
**09.01.2002 Bulletin 2002/02**

(21) Application number: **01305760.9**

(22) Date of filing: **04.07.2001**

(51) Int Cl.[7]: **C09B 69/02**, C09B 23/14, G11B 7/24
// C09B45/20, C09B45/22

(84) Designated Contracting States:
**AT BE CH CY DE DK ES FI FR GB GR IE IT LI LU MC NL PT SE TR**
Designated Extension States:
**AL LT LV MK RO SI**

(30) Priority: **05.07.2000 JP 2000203873**
**09.11.2000 JP 2000342427**
**24.04.2001 JP 2001126671**

(71) Applicant: **KABUSHIKI KAISHA HAYASHIBARA SEIBUTSU KAGAKU KENKYUJO**
**Okayama-shi Okayama (JP)**

(72) Inventors:
- **Kasada, Chiaki,**
  **c/o K.K. Hayashibara Seibutsu Kag**
  **Okayama-shi, Okayama 700-0907 (JP)**
- **Koyama, Yoshinori,**
  **c/o K.K. Hayashibara Seibutsu**
  **Okayama-shi, Okayama 700-0907 (JP)**
- **Kawata, Toshio, K.K. Hayashibara Seibutsu Kag.**
  **Okayama-shi, Okayama 700-0907 (JP)**
- **Yasui, Shigeo,**
  **c/o K.K. Hayashibara Seibutsu Kag.**
  **Okayama-shi, Okayama 700-0907 (JP)**

(74) Representative: **Daniels, Jeffrey Nicholas et al**
**Page White & Farrer 54 Doughty Street**
**London WC1N 2LS (GB)**

(54) **Styryl dyes**

(57) Disclosed are novel styryl dyes, and light absorbents, light-resistant improvers, and optical recording media, which comprise the styryl dyes. The styryl dyes exert satisfactory solubilities and relatively-high light resistance when used in high-density optical recording media.

EP 1 170 339 A2

Printed by Jouve, 75001 PARIS (FR)

## Description

### Background of the Invention

### Field of the Invention

The present invention relates to organic dye compounds, and more particularly, to styryl dyes which exert desirable light features and solubilities in optical recording media.

### Description of the Prior Art

In a multimedia age, great focus is placed on the following optical recording media:

(i) compact disc recordable or CD-R, a write-once memory using compact disc, and
(ii) digital versatile disc recordable or DVD-R, a write-once memory using digital video disc.

Optical recording media can be roughly classified into inorganic optical recording media which have recording layers composed of inorganic substances such as tellurium, selenium, rhodium, carbon, or carbon sulfide; and organic optical recording media which have recording layers mainly composed of light absorbents containing organic dye compounds.

Among these optical recording media, organic optical recording media can be usually prepared by dissolving a polymethine dye in an organic solvent such as 2,2,3,3-tetrafluoro-1-propanol (abbreviated as "TFP" hereinafter), coating the solution on the surface of a polycarbonate substrate, drying the coated solution to form a recording layer, and sequentially forming and coating on the surface of the recording layer (i) a reflection layer comprising a metal such as gold, silver or copper, and (ii) a protection layer comprising an ultraviolet ray hardening resin. When compared with inorganic optical recording media, organic media sometimes have the drawback that their recording layers are easily changed by light in the environment such as reading- and natural-light. Optical recording media, however, have the advantage that they can be made into optical recording media at a lesser cost because their recording layers can be directly formed by coating light absorbents in a solution form on the surface of substrates. Further, organic optical recording media, which are composed of organic materials, are now mainly used as low-cost optical recording media because they are substantially free of corrosion even when contacted with moisture or sea water and because information recorded therein in a prescribed format can be read out by using commercialized read-only readers by the establishment of thermal-deformation -type optical recording media as organic optical recording media.

What is urgently required in organic optical recording media is to increase their storage capacity to suit this multimedia age. The research for such improvement, which is now being eagerly sought in this field, is to increase the recording capacity per one side to 4.7 GB or more by shortening the wavelength of the laser beam for writing information from a wavelength of 775-795 nm, that is irradiated by conventional GaAlAs semiconductor lasers, to a wavelength of shorter than 700 nm. However, since most of conventional polymethine dyes used for CD-Rs could not appropriately write and read information by using a laser beam with a wavelength shorter than 700 nm when used in high-density optical recording media such as DVD-Rs, the polymethine dyes now used cannot fulfill the need for high-storage density required in many fields.

Another problem with high-storage density of organic optical recording media, is that there exist problems of thermal decomposition and heat resistance of dyes. In organic optical recording media, pits are formed by using heat generated when dyes absorb a laser beam and then melt and decompose. However, since the melting point and the decomposition point of most conventional polymethine dyes are different and their thermal difference is quite high, pits are formed slowly on a recording layer when irradiated by a laser beam and the heat of fusion and decomposition conducts to the area around the irradiated points and may easily distort the previously formed adjacent pits. Further, most of conventional polymethine dyes have a rather lower decomposition point, and this results in a problem that the part around the pits and other pit-less part on the recording surface may be easily deformed by the accumulated heat generated when the dyes are exposed to a reading laser-beam for a relatively-long period of time because the polymethine dyes have a relatively-low heat resistance.

The common object of polymethine dyes used in organic optical recording media is light resistance to writing- and reading- lights. Polymethine dyes such as cyanine- and styryl-dyes which are frequently used in organic optical recording media generally have relatively-low light resistance. It is said that they are easily oxidized and decomposed by singlet oxygen which occurs by irradiating a laser beam when the polymethine dyes are used in optical recording media. To solve this problem, it has been proposed that an organic metal complex with light-resistance improving ability be preferably added to the polymethine dyes and that a cation of the former polymethine dye and an anion of the latter organic metal complex are preferably combined. In these cases, though conventional organic metal complexes and united polymethine dyes exert remarkable light-resistance improving ability, there exists a problem that the efficiency

for producing optical recording media and the yield of products are reduced, because organic metal complexes and polymethine dyes have relatively-low solubilities in organic solvents such as TFP (up to about 10 mg/ml).

Summary of the Invention

In view of the foregoing, an object of the present invention is to provide organic dye compounds which satisfactorily exert light feature and solubility when used in optical recording media.
To attain the above object, the present inventors eagerly studied and screened compounds. As a result, they found that styryl dyes, which are obtainable through a step of (1) reacting a compound which gives a cation of styryl dye having an indolenin-ring at either end of the dimethine chain, with (2) a compound which gives an anion of azo organic metal complex, exert remarkable light absorption features and light resistance and have excellent solubilities in organic solvents and thermal properties. The present invention was made based on the creation of novel styryl dyes and the discovery of their industrially useful characteristics.

Brief Explanation of the Accompanying Drawings

FIG. 1 is a visible absorption spectrum of one of the styryl dyes of the present invention.
FIG. 2 is a visible absorption spectrum of a conventional related compound.
FIG. 3 shows the result of TGA and DTA for one of the styryl dyes of the present invention.
FIG. 4 shows the result of TGA and DTA for a conventional related compound.

Detailed Description of the Invention

The present invention solves the above object by providing the styryl dyes represented by Formula 1, which substantially absorb a visible light with a wavelength of shorter than 700 nm and have the solubilities of over 10 mg/ml in TFP at 20 °C.

Formula 1:

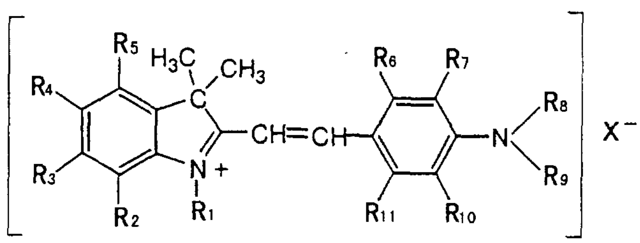

In Formula 1, $R_1$ to $R_{11}$ each independently represents a hydrogen atom or an appropriate substituent. When explained respectively, $R_1$ represents an aliphatic hydrocarbon group which is usually selected from those having up to eight carbon atoms, preferably, up to five carbon atoms, such as methyl, ethyl, vinyl, propyl, isopropyl, 1-propenyl, 2-propenyl, isopropenyl, butyl, isobutyl, *sec*-butyl, *tert*-butyl, 2-butenyl, 1,3-butadienyl, pentyl, isopentyl, neopentyl, *tert*-pentyl, and 2-penteny groups.
$R_2$ to $R_7$ and $R_{10}$ to $R_{11}$ in Formula 1 each independently represents a hydrogen atom; an aliphatic or alicyclic hydrocarbon group such as methyl, ethyl, ethynyl, propyl, isopropyl, 1-propenyl, 2-propenyl, 2-propynyl, butyl, isobutyl, *sec*-butyl, *tert*-butyl, 2-butenyl, 1,3-butadienyl, pentyl, isopentyl, neopentyl, *tert*-pentyl, 1-methylpentyl, 2-methylpentyl, 2-pentenyl, 2-penten-4-ynyl, cyclopentyl, hexyl, isohexyl, 5-methylhexyl, cyclohexyl, 1-cyclohexenyl, heptyl, octyl, decyl, or dodecyl group; an aromatic hydrocarbon group such as phenyl, *o*-cumenyl, *m*-cumenyl, *p*-cumenyl, mesityl, xylyl, *o*-tolyl, *m*-tolyl, *p*-tolyl, biphenylyl, or naphthyl groups an ether such as methoxy, ethoxy, propoxy, isopropoxy, buthoxy, isobuthoxy, *sec*-buthoxy, *tert*-buthoxy, pentyloxy, or phenoxy group; a halogen such as fluorine, chlorine, bromine, or iodine; an ester such as methoxycarbonyl, ethoxycarbonyl, propoxycarbonyl, acetoxy, or benzoyloxy group; an amino group such as primary amino, methylamino, dimethylamino, ethylamino, diethylamino, propylamino, dipropylamino, isopropylamino, diisopropylamino, buthylamino, dibuthylamino, cyclohexylamino, dicyclohexylamino, anilino, diphenylamino, *o*-toluidino, *m*-toluidino, *p*-toluidino, *o*-anisidino, *m*-anisidino, *p*-anisidino, or xylidino group; an alkylsulfamoyl group such as methylsulfamoyl, dimethylsulfamoyl, ethylsulfamoyl, diethylsulfamoyl, propylsulfamoyl, dipropylsulfamoyl, isopropylsulfamoyl, diisopropylsulfamoyl, butylsulfamoyl, or dibutylsulfamoyl group; an acylamino

group such as acetylamino, propylamino, or benzoylamino group; sulfino, sulfo group, hydroxy group, carboxy group, cyano group, and nitro group.

$R_8$ and $R_9$ in Formula 1 each identically or differently represents an aliphatic or alicyclic hydrocarbon group. The aliphatic hydrocarbon group is usually selected from those having up to four carbon atoms, such as methyl, ethyl, propyl, isopropyl, butyl, isobutyl, *sec*-butyl, and *tert*-butyl groups. Examples of the alicyclic hydrocarbon group are monocyclic groups such as phenyl, *o*-tolyl, *m*-tolyl, *p*-tolyl, xyryl, mesityl, *o*-cumenyl, *m*-cumenyl, and *p*-cumenyl groups.

When any one of $R_1$ to $R_{11}$ in Formula 1 represents a substituent with hydrogen atom, the hydrogen atom may be replaced with a halogen such as fluorine, chlorine, bromine, or iodine; an ether such as methoxy, ethoxy, trifluoromethoxy, propoxy, isopropoxy, buthoxy, isobuthoxy, *sec*-buthoxy, *tert*-buthoxy, pentyloxy, phenoxy, or benzyloxy group; an ester such as methoxycarbonyl, trifluoromethoxycarbonyl, ethoxycarbonyl, propoxycarbonyl, acetoxy, trifluoroacetoxy, or benzoyloxy group; an aromatic hydrocarbon groups such as phenyl, biphenylyl, *o*-tolyl, *m*-tolyl, *p*-tolyl, *o*-cumenyl, *p*-cumenyl, *m*-cumenyl, xylyl, mesityl, styryl, or cinnamyl group; a heterocyclic group such as 2-pyridyl, 2-quinolyl, 2-tetrahydropyranyl, 2,2-dimethyl-1,3-dioxolane-4-yl, 1,3-dioxolane-2-yl, 3,5-dimethylisooxazole-4-yl, 3-piperidinyl, piperidino, morpholino, 1-piperazinyl, pyrrolidine-1-yl, 1-methyl-pyrrolidinyl, 2-benzoimidazolyl, 5-uracil, or benzotriazole-1-yl group; or a characteristic group, which includes oxygen, sulfur, or nitrogen, such as hydroxy, carboxy, cyano, nitro, sulfino, or sulfo group.

$R_3$ in Formula 1 may form a mono- or poly-heterocyclic ring which includes either or both carbon atoms of $R_2$ and/or $R_4$ neighboring to $R_3$ and includes one or more nitrogens, for example, tetrahydroquinoline-, piperazine-, piperidine-, pyrrolidine-, morpholine-, and jurolidine-rings. $R_8$ and $R_9$ in Formula 1 may also form heterocyclic ring similarly as above which include both a nitrogen atom bound to $R_8$ and $R_9$ and a benzene ring bound to the nitrogen atom.

In Formula 1, $X^-$ represents a negatively-charged azo organic metal complex, and more preferably, a counter ion of an azo organic metal complex with a light-resistance improving ability. Each counter ion is, for example, a compound represented by Formulae 2 to 6. Since all of these counter ions form stable salts, complexes, and compounds with the cation of styryl dye in Formula 1 and have a remarkable future to improve light resistance of the cation of styryl dye, they can be advantageously used in the present invention.

Formula 2:

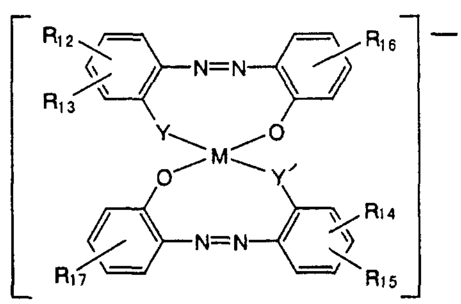

Formula 3:

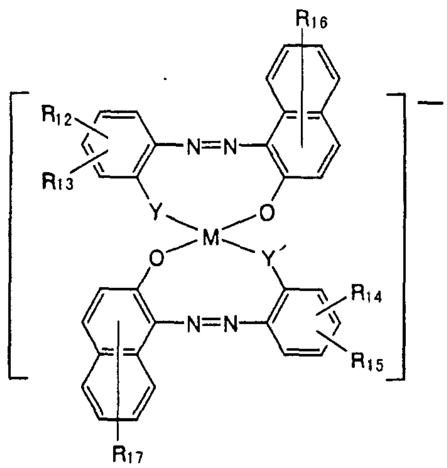

Formula 4:

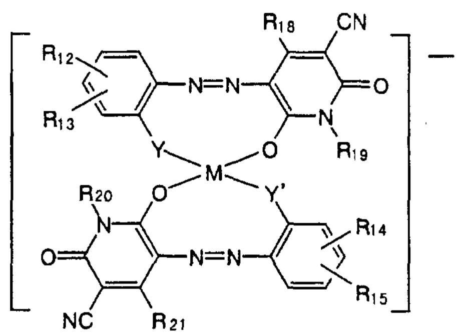

Formula 5:

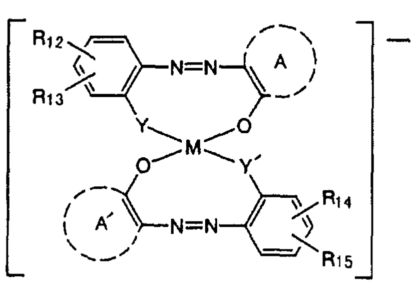

Formula 6:

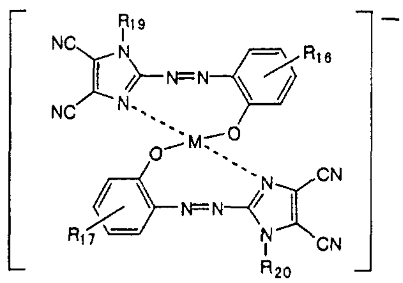

Throughout Formulae 2 to 6, M is a central metal and usually selected from metal elements from the Groups II-III of the periodic table and transition elements such as scandium, yttrium, titanium, zirconium, vanadium, niobium, tantalum, chromium, molybdenum, tungsten, manganese, technetium, rhenium, iron, ruthenium, osmium, cobalt, rhodium, iridium, nickel, palladium, platinum, copper, silver, gold, zinc, and cadmium.

Throughout Formulae 2 to 5, $R_{12}$ to $R_{15}$ each independently represents a hydrogen atom; a halogen such as fluorine, chlorine, bromine, or iodine; an aliphatic hydrocarbon group such as methyl, trifluoromethyl, ethyl, propyl, isopropyl, butyl, isobutyl, *sec*-butyl, *tert*-butyl, pentyl, isopentyl, neopentyl, *tert*-pentyl, 1-methylpentyl, 2-methylpentyl, hexyl, isohexyl, or 5-methylhexyl group; an alicyclic hydrocarbon group such as cyclopropyl, cyclobutyl, cyclopentyl, cyclohexyl, or 1-cyclohexenyl group; an ether such as methoxy, trifluoromethoxy, ethoxy, propoxy, isopropoxy, buthoxy, isobuthoxy, *sec*-buthoxy, *tert*-buthoxy, pentyloxy, phenoxy, or benzyloxy group; an ester such as methoxycarbonyl, trifluoromethoxycarbonyl, ethoxycarbonyl, propoxycarbonyl, acetoxy, trifluoroacetoxy, or benzoyloxy group; an alkylsulfamoyl group such as methylsulfamoyl, dimethylsulfamoyl, ethylsulfamoyl, diethylsulfamoyl, propylsulfamoyl, dipropylsulfamoyl, isopropylsulfamoyl, diisopropylsulfamoyl, butylsulfamoyl, or dibutylsulfamoyl group; sulfoamino group, cyano group, or nitro group. Y and Y' each identically or differently represent heteroatoms selected from metal elements of the Group VI of the periodic table such as oxygen, sulfur, selenium, and tellurium.

Throughout Formulae 2, 3, and 6, $R_{16}$ and $R_{17}$ each independently represents a hydrogen atom; a halogen such as fluorine, chlorine, bromine, or iodine; an aliphatic hydrocarbon group such as methyl, ethyl, propyl, isopropyl, butyl, isobutyl, *sec*-butyl, *tert*-butyl, pentyl, isopentyl, neopentyl, *tert*-pentyl, 1-methylpentyl, 2-methylpentyl, hexyl, isohexyl, or 5-methylhexyl groups; an ether such as methoxy, trifluoromethoxy, ethoxy, propoxy, isopropoxy, buthoxy, isobuthoxy, *sec*-buthoxy, *tert*-buthoxy, pentyloxy, phenoxy, or benzyloxy group; a substituted or unsubstituted aliphatic, alicyclic, or aromatic amino group such as primary amino, methylamino, dimethylamino, ethylamino, diethylamino, propylamino, dipropylamino, isopropylamino, diisopropylamino, buthylamino, dibuthylamino, anilino, *o*-toluidino, *m*-toluidino, *p*-toluidino, xylidino, pyridylamino, piperazinyl, piperidino, or pyrrolidino group; hydroxy group, carboxy group, carbamoyl group, sulfino group, sulfo group, or sulfonamide group. One or more hydrogen atoms in these substituted amino, carbamoyl, sulfo, and sulfonamide groups may be replaced by halogens such as fluorine, chlorine, bromine, and iodine; aliphatic hydrocarbon groups such as methyl, ethyl, propyl, isopropyl, butyl, isobutyl, *sec*-butyl, *tert*-butyl, pentyl, isopentyl, *tert*-pentyl, 1-methylpentyl, 2-methylpentyl, hexyl, isohexyl, and 5-methylhexyl groups; ethers such as methoxy, trifluoromethoxy, ethoxy, propoxy, isopropoxy, buthoxy, isobuthoxy, *sec*-buthoxy, *tert*-buthoxy, pentyloxy, phenoxy, and benzyloxy groups; aromatic hydrocarbon groups such as phenyl, biphenylyl, *o*-tolyl, *m*-tolyl, *p*-tolyl, *o*-cumenyl, *m*-cumenyl, *p*-cumenyl, xylyl, mesityl, styryl, cinnamyl, and naphthyl groups; and others such as carboxy, hydroxy, cyano, and nitro groups.

Throughout Formulae 4 to 6, $R_{18}$ to $R_{21}$ each independently represents a hydrogen atom and an aliphatic hydrocarbon group such as methyl, ethyl, propyl, isopropyl, butyl, isobutyl, *sec*-butyl, *tert*-butyl, pentyl, isopentyl, neopentyl, *tert*-pentyl, 1-methylpentyl, 2-methylpentyl, hexyl, isohexyl, or 5-methylhexyl group. The aliphatic hydrocarbon groups may have one or more substituents. Examples of the substituents are halogens such as fluorine, chlorine, bromine, and iodine; ethers such as methoxy, trifluoromethoxy, ethoxy, propoxy, isopropoxy, buthoxy, isobuthoxy, *sec*-buthoxy, *tert*-buthoxy, pentyloxy, phenoxy, and benzyloxy groups; aromatic hydrocarbon groups such as phenyl, biphenylyl, *o*-tolyl, *m*-tolyl, *p*-tolyl, *o*-cumenyl, *m*-cumenyl, *p*-cumenyl, xylyl, mesityl, cinnamyl, and naphthyl groups; and others such as carboxy, hydroxy, cyano, and nitro groups.

In Formula 5, A and A' each identically or differently represents 5- to 10-ring heterocyclic group, which contains one or more hetero atoms selected from nitrogen, oxygen, sulfur, selenium and tellurium, for example, those with furil, thienyl, pyrrolyl, pyridyl, piperidino, piperidyl, quinolyl, and isoxazolyl groups. The heterocyclic groups may have one or more substitutes such as aliphatic hydrocarbon groups, for example, methyl, trifluoromethyl, ethyl, propyl, isopropyl, buthyl, isobutyl, *sec*-butyl, *tert*-butyl, pentyl, isopentyl, neopentyl, *tert*-pentyl, 1-methylpentyl, 2-methylpentyl, hexyl,

isohexyl, and 5-methylhexyl groups; esters such as methoxycarbonyl, trifluoromethoxycarbonyl, ethoxycarbonyl, propoxycarbonyl, acetoxy, trifluoroacetoxy, and benzoyloxy groups; aromatic hydrocarbon groups such as phenyl, biphenylyl, *o*-tolyl, *m*-tolyl, *p*-tolyl, *o*-cumenyl, *m*-cumenyl, *p*-cumenyl, xylyl, mesityl, styryl, cinnamyl, and naphthyl groups; and others such as carboxy, hydroxy, cyano, and nitro groups. Azo compounds, which are composed azo organic metal complexes represented by Formula 5, are obtainable in a conventional manner by reacting a diazonium salt having $R_{12}$ and $R_{13}$ or having $R_{14}$ and $R_{15}$ corresponding to Formula 5 with a heterocyclic compound having an active methylene group adjoining a carbonyl group, for example, an isooxazolone compound, oxazolone compound, thionaphthene compound, pyrazolone compound, barbituric acid compound, hydantoin compound, and rhodanine compound.

Concrete examples of the styryl dyes of the present invention are those represented by Chemical Formulae 1 to 36. All of them have absorption maximum spectra in the visible region, substantially absorb visible light with a wavelength of shorter than 700 nm when formed in a thin layer, and have relatively-high light resistance, e.g. to natural- and artificial-lights, and have relatively-high solubilities in organic solvents, which are frequently used in the preparation of optical recording media, such as TFP. Most of the present styryl dyes have only decomposition points, or decomposition points which are substantially undistinguishable from their melting points, have relatively-high decomposition points, and promptly decompose at around their decomposition points. Accordingly, these styryl dyes are very useful as light absorbents in optical recording media using a visible light with a wavelength of shorter than 700 nm as the writing light, particularly high-density-recordable-type optical recording media such as DVD-Rs using a laser beam with a wavelength of 630-680 nm. Since these styryl dyes exert a remarkable ability to improve light resistance compared to general cyanine dyes, they are also useful not only as light absorbents in DVD-Rs, but as light resistant improvers in CD-Rs which have recording layers constituted by cyanine dyes and which use visible light with a wavelength of over 700 nm and under 800 nm such as provided by a laser beam having a wavelength of 775-795 nm, used as a writing light.

Chemical Formula 1:

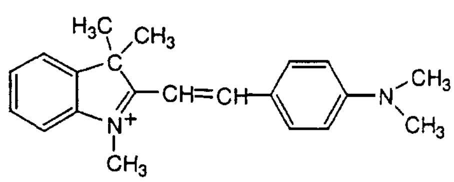
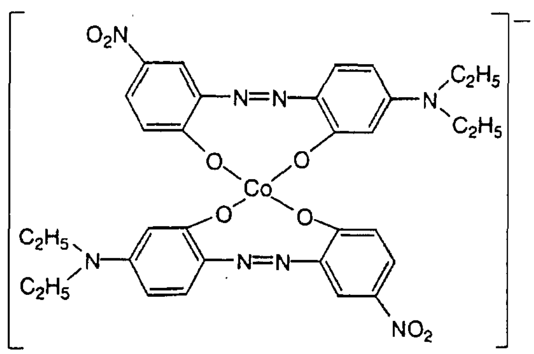

Chemical Formula 2:

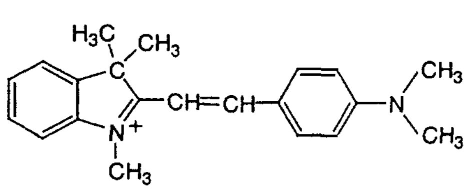
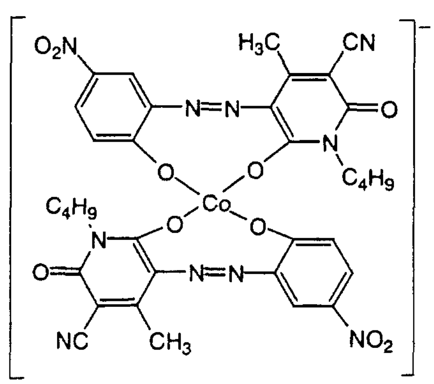

Chemical Formula 3:

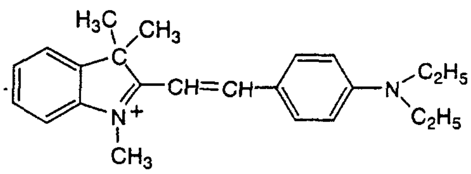
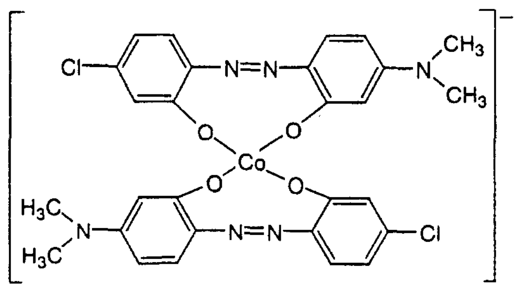

Chemical Formula 4:

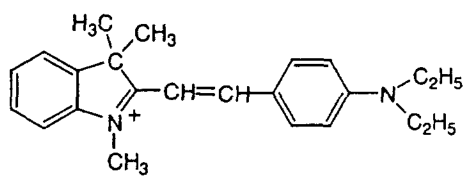
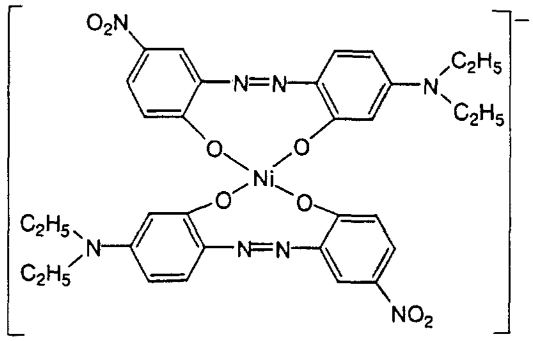

Chemical Formula 5:

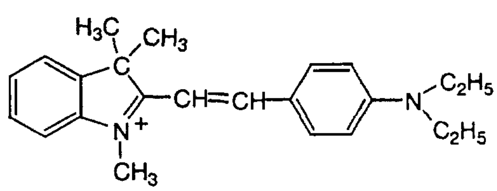
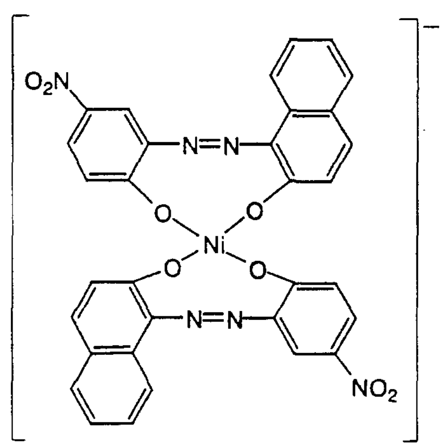

Chemical Formula 6:

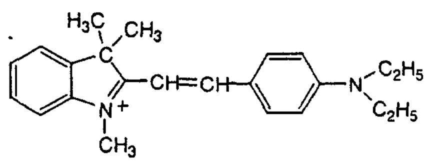
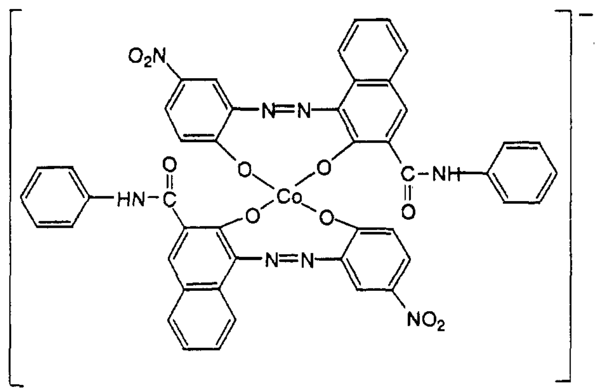

Chemical Formula 7:

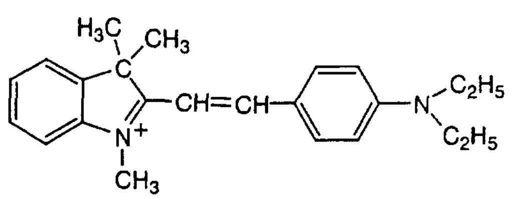
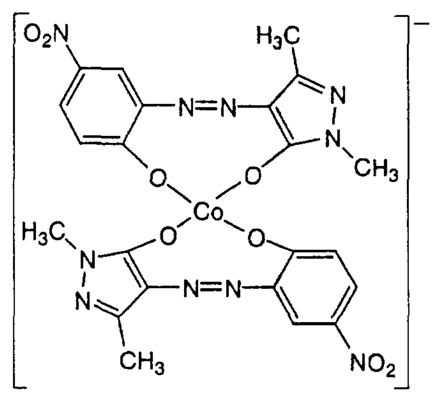

Chemical Formula 8:

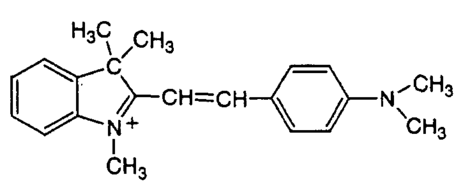
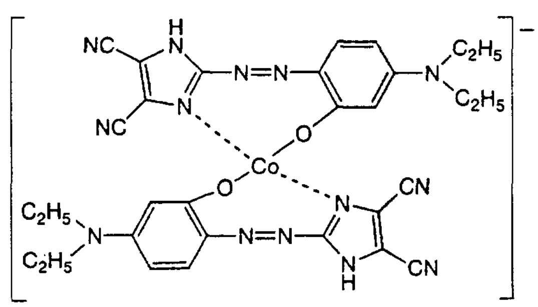

Chemical Formula 9:

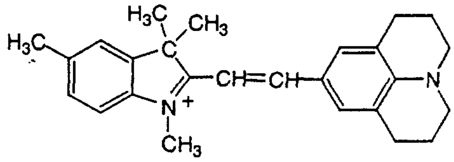

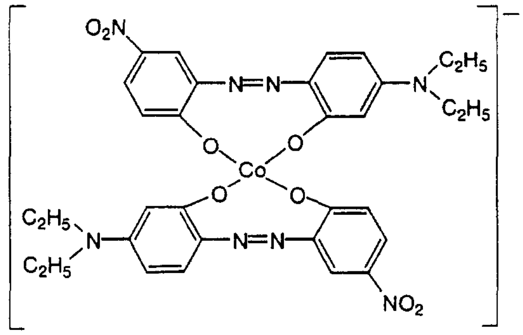

Chemical Formula 10:

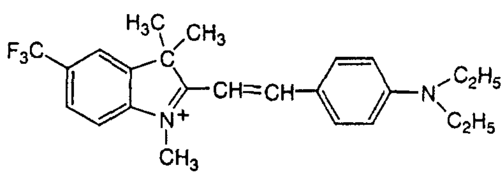

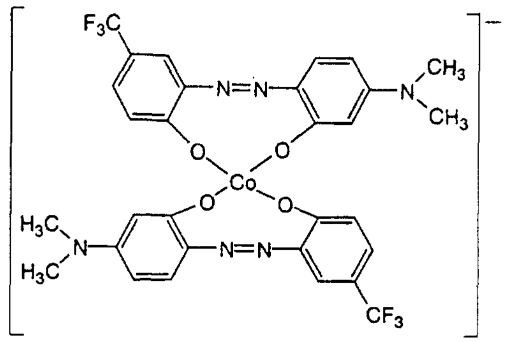

Chemical Formula 11:

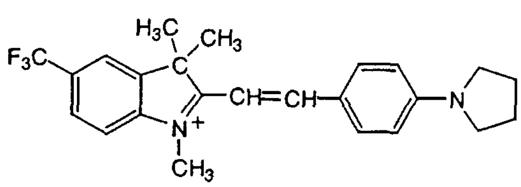

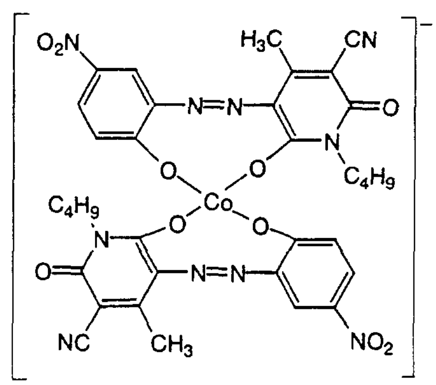

Chemical Formula 12:

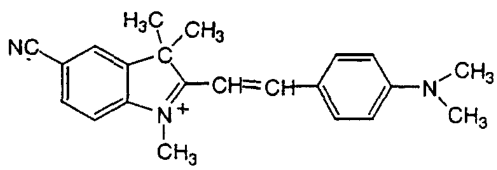

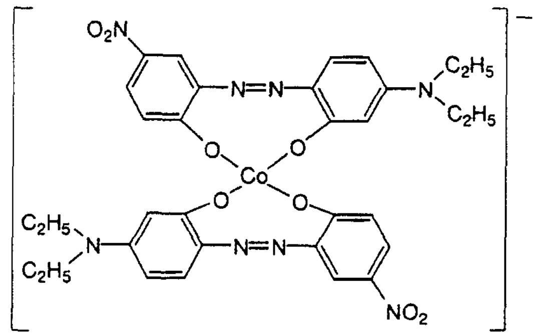

Chemical Formula 13:

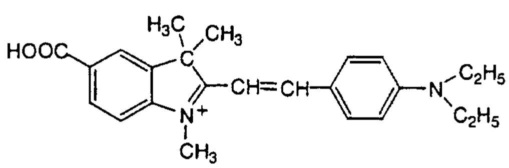

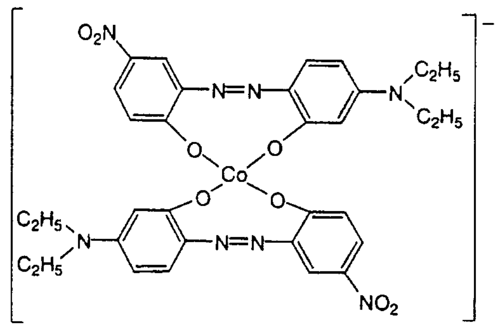

Chemical Formula 14:

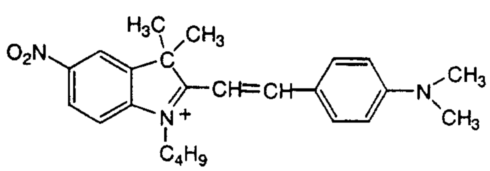

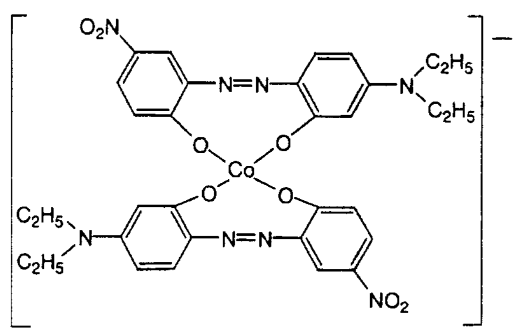

Chemical Formula 15:

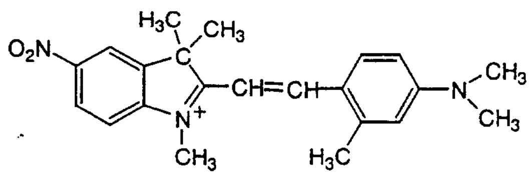

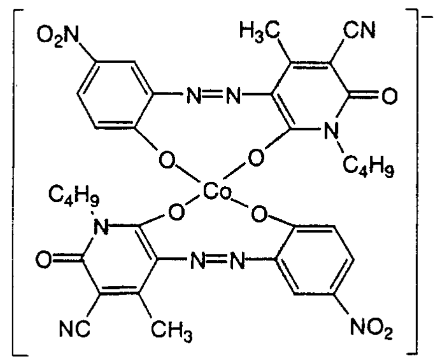

Chemical Formula 16:

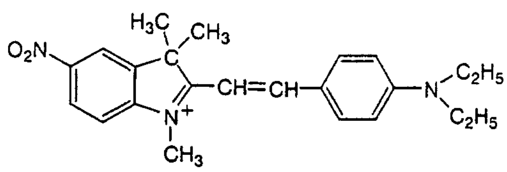

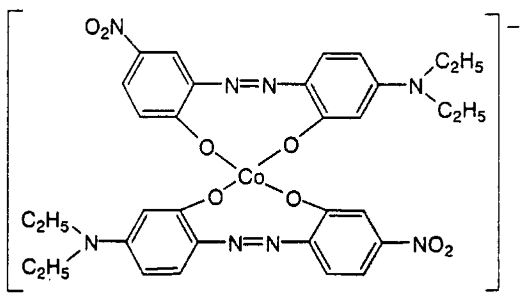

Chemical Formula 17:

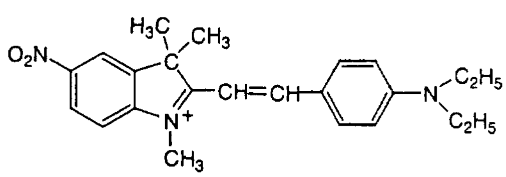

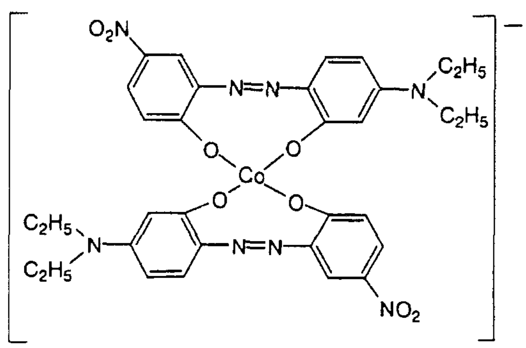

Chemical Formula 18:

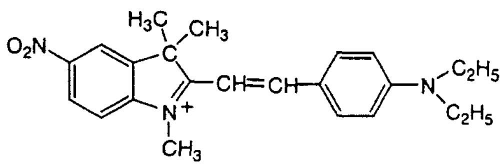

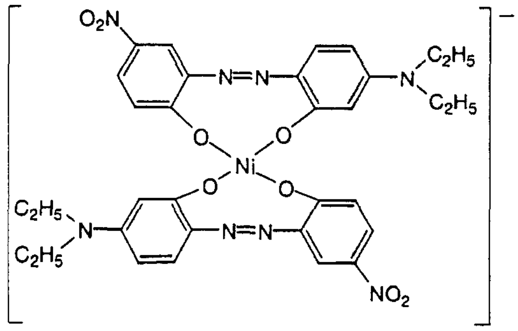

Chemical Formula 19:

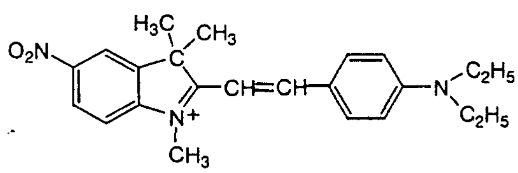

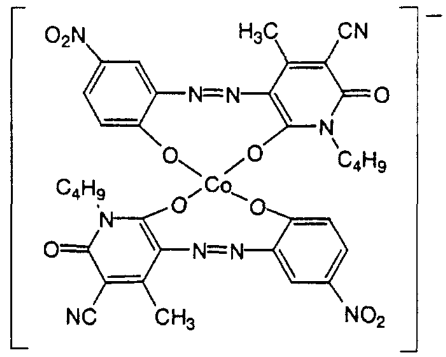

Chemical Formula 20:

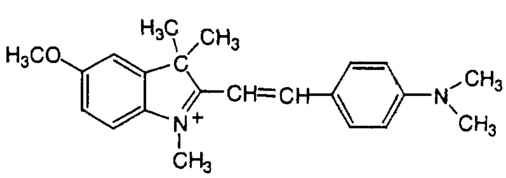

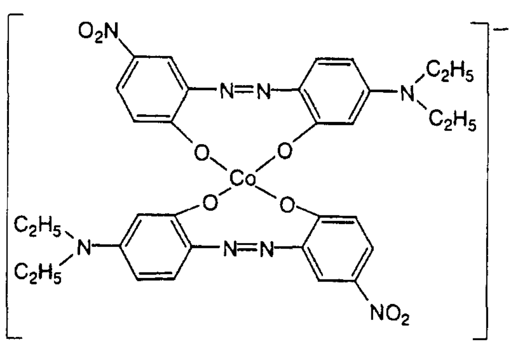

Chemical Formula 21:

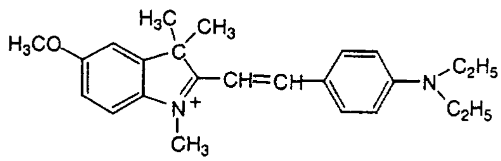

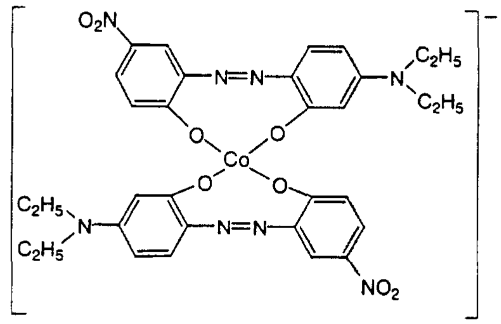

Chemical Formula 22:

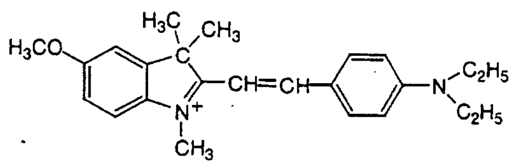

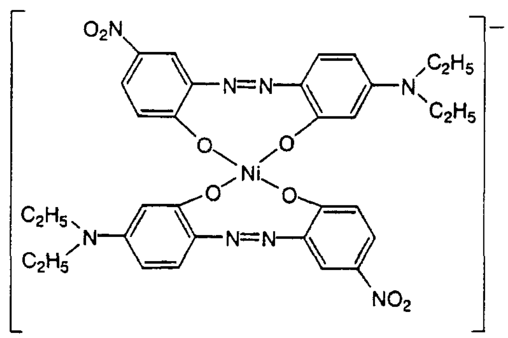

Chemical Formula 23:

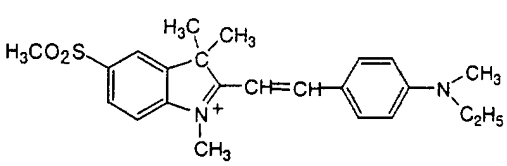

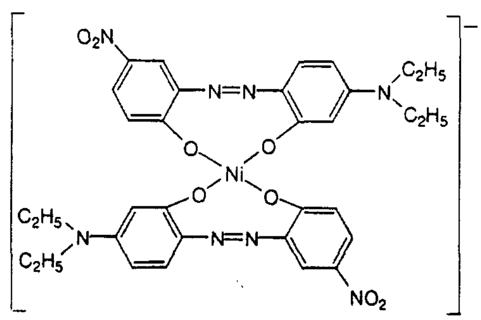

Chemical Formula 24:

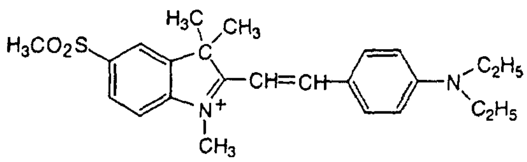

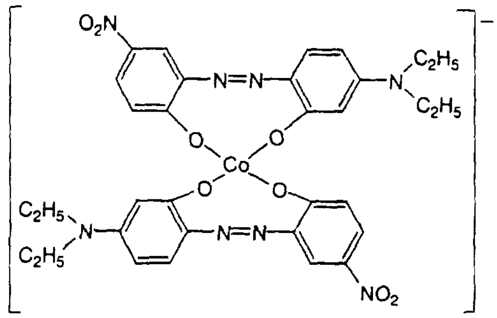

Chemical Formula 25:

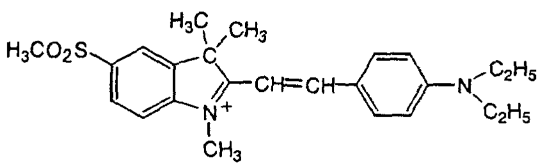

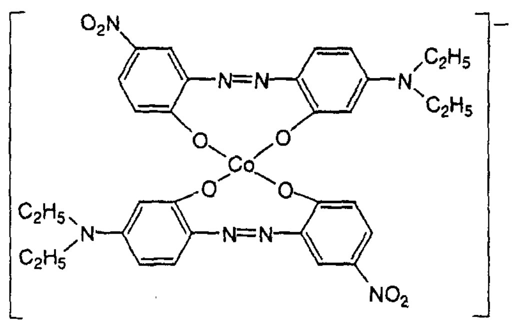

Chemical Formula 26:

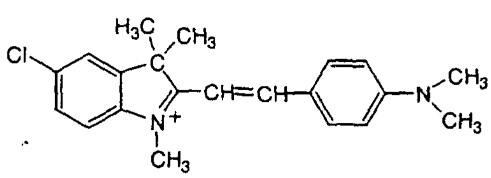

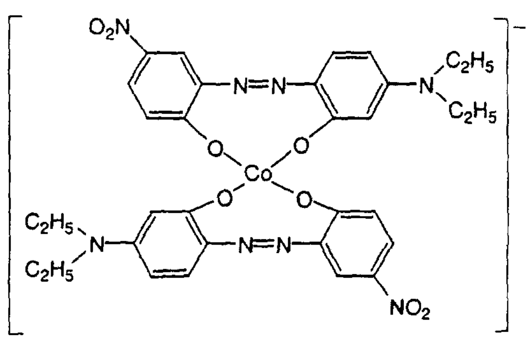

Chemical Formula 27:

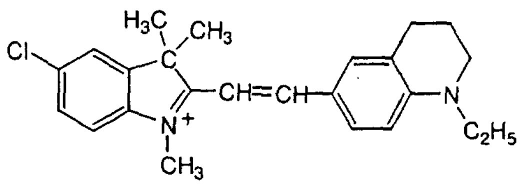

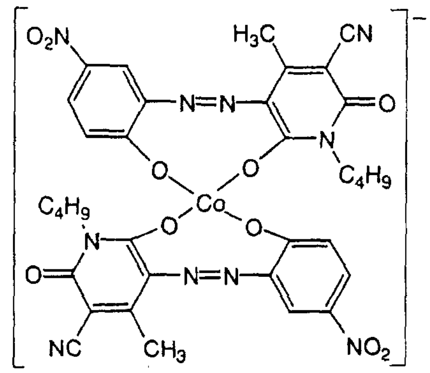

Chemical Formula 28:

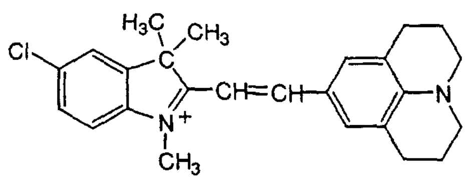

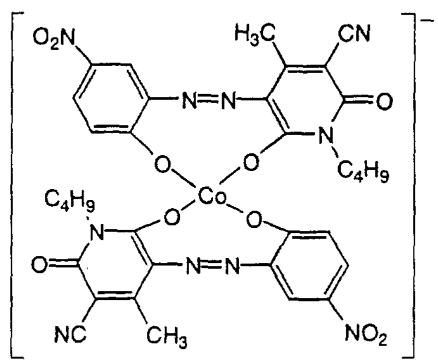

Chemical Formula 29:

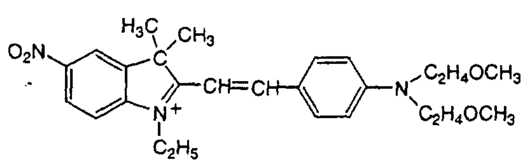

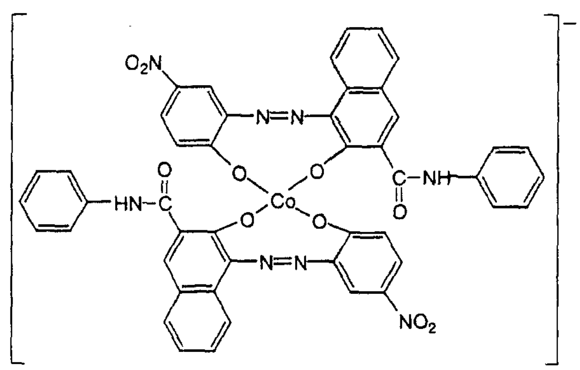

Chemical Formula 30:

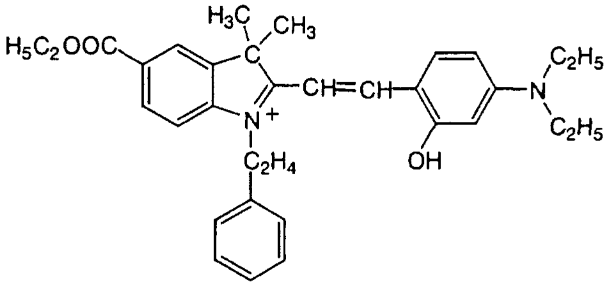

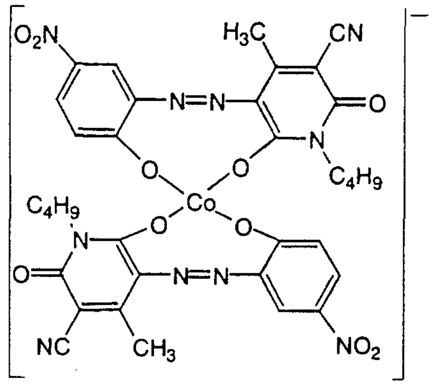

Chemical Formula 31:

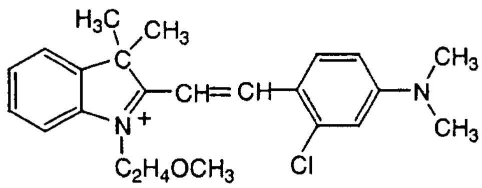

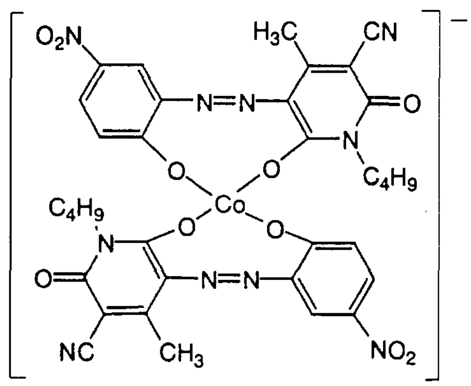

Chemical Formula 32:

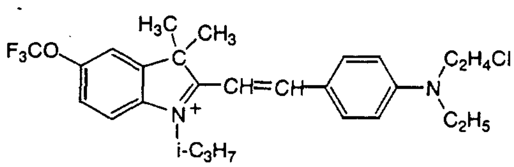

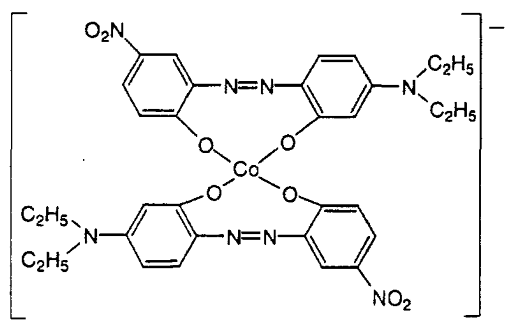

Chemical Formula 33:

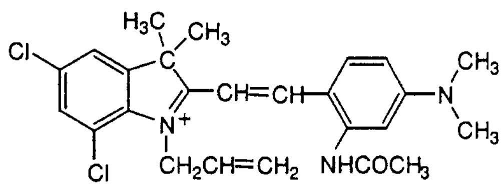

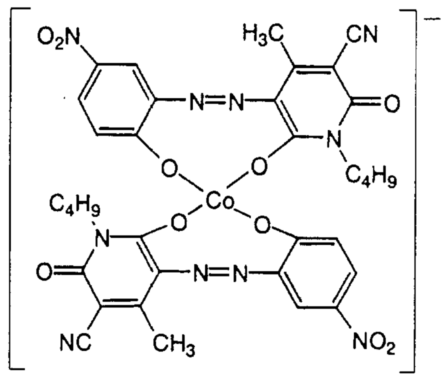

Chemical Formula 34:

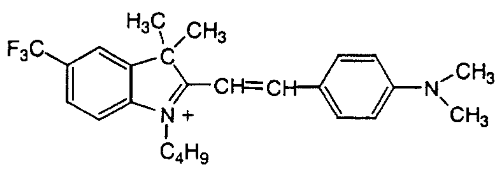

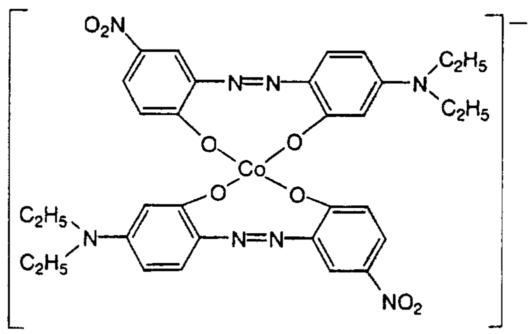

Chemical Formula 35:

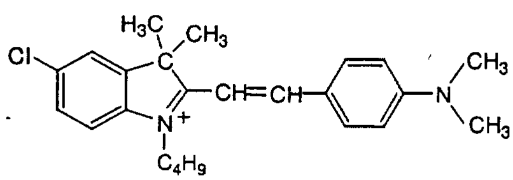

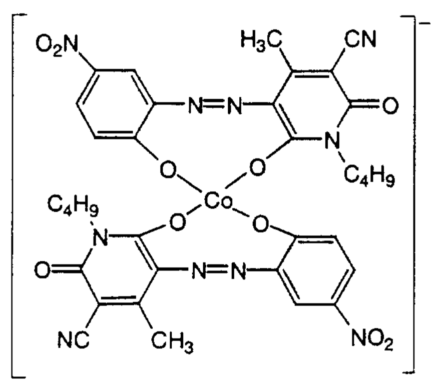

Chemical Formula 36:

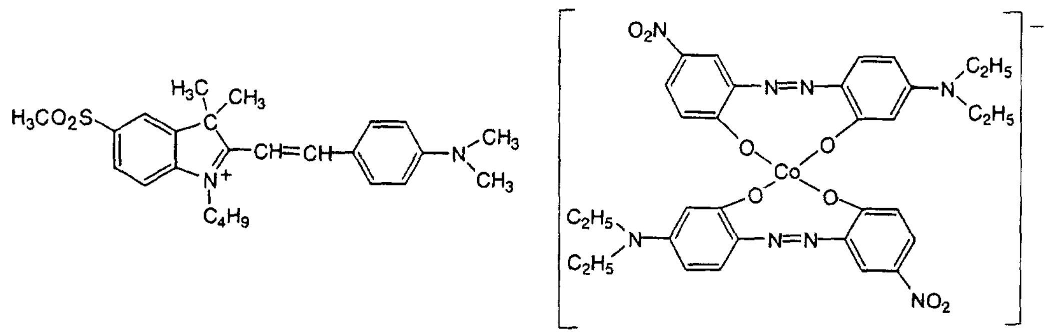

The styryl dyes of the present invention can be prepared by various methods. They are preferably produced through a step of reacting a compound, which gives a cation of styryl dye corresponding to Formula 1, with a compound which gives an anion of azo organic metal complex from an economical view point. For example, appropriate amounts (usually about equal mols) of these compounds are placed in a reaction vessel, and the resulting mixture is dissolved in an adequate solvent, and then reacted at ambient temperature or greater than ambient temperature.

The following solvents can be used: Hydrocarbons such as pentane, hexane, cyclohexane, octane, benzene, toluene, and xylene; halogen compounds such as carbon tetrachloride, chloroform, 1,2-dichloroethane, 1,2-dibromoethane, trichloroethylene, tetrachloroethylene, chlorobenzene, bromobenzene, and α -dichlorobenzene; alcohols and phenols such as methanol, ethanol, 1-propanol, 2-propanol, 1-butanol, 2-butanol, isobutyl alcohol, isopentyl alcohol, cyclohexanol, ethylene glycol, propylene glycol, 2-methoxyethanol, 2-ethoxyethanol, phenol, benzyl alcohol, cresol, diethylene glycol, triethylene glycol, and glycerin; ethers such as diethyl ether, diisopropyl ether, tetrahydrofuran, tetrahydropyran, 1,4-dioxane, anisole, 1,2-dimethoxyethane, diethylene glycol dimethyl ether, dicyclohexyl-18-crown-6, methylcarbitol, and ethylcarbitol; ketones such as furfural, acetone, ethyl methyl ketone, and cyclohexanone; acids and acidic derivatives such as acetic acid, acetic anhydride, trichloroacetic acid, trifluoroacetic acid, propionic anhydride, ethyl acetate, butyl carbonate, ethylene carbonate, propylene carbonate, formamide, N-methylformamide, N,N-dimethylformamide, N,N-acetoamide, N,N-dimethylacetoamide hexamethylphosphoric triamide, and phosphoric trimethyl; nitriles such as acetonitrile, propionitrile, succinonitrile, and benzonitrile; nitro compounds such as nitromethane and nitrobenzene; sulfur-containing compounds such as dimethylsulfoxide; and water. These solvents can be appropriately used in combination, if necessary.

In general, the reactivity decreases as the volume of solvent increases, while the homogeneous heating and stirring of the contents becomes difficult and undesirable side reaction easily occurs as the volume of solvent decreases. Thus, the volume of solvent is desirably up to 100 times, usually, 5 to 50 times of the reactant compounds by weight. The reaction completes within 10 hours, usually, 0.5-10 hours, depending on the kinds of reactant compounds and reaction conditions. The reaction process can be monitored by conventional methods, for example, thin-layer chromatography, gas chromatography, and high-performance liquid chromatography. Thus, all the styryl dyes represented by Chemical Formulae 1 to 36 can be easily obtained by the above methods in a desirable yield.

The cation of the styryl dyes corresponding to Formula 1 is obtainable in a salt form with an anion which is frequently used in polymethine dyes according to the methods reported by K. Venkataraman " The Chemistry of Synthetic Dyes", Vol. 2, pp. 1,172-1,174 (1952) published by Academic Press, Inc. and by K. Venkataraman " The Chemistry of Synthetic Dyes", Vol. 4, pp. 317-327 (1971) published by the same publisher. The anion of the azo organic metal complexes is obtainable in a conventional manner as the salt form with a metal ion such as a sodium ion or potassium ion; a tetraarylammonium compound; a triarylalkylammonium compound; a tetraalkylammonium compound; a heterocyclic ammonium compound such as a pyridium compound, indolenium compound, benzoindolenium compound, piperazinium compound, or pyrrolidinium compound.

The styryl dyes of the present invention thus obtained can be used in the form of a reaction mixture without any further treatment, and are usually used after being purified by any of the following conventional manners generally used for purifying their related compounds; dissolution, extraction, separation, decantation, filtration, concentration, thin-layer chromatography, column chromatography, gas chromatography, high-performance liquid chromatography, distillation, crystallization, and sublimation. If necessary, two or more of these purification manners can be used in combination. For use as a light absorbent in high-density optical recording media such as DVD-Rs, etc., the styryl dyes of the present invention should preferably be substantially purified, e.g. distilled, crystallized, and/or sublimated prior to use.

Explaining the uses of the styryl dyes of the present invention, they have absorption maxima in a visible region and substantially absorb a visible light with a wavelength of shorter than 700 nm when formed in a thin-layer, and more particularly using a laser beam with a wavelength around 630-680 nm. When measured by the method in the later described Example, the styryl dyes have decomposition points (exothermic starting temperatures of styryl dyes as a sample in differential thermal analysis) which are closely adjacent (i.e., usually within 10 °C or less) to their melting points (endothermic starting temperature of styryl dyes as a sample), have only decomposition points or those which are substantially undistinguishable from their melting points, have decomposition points of over 240°C, and more preferably, outstandingly-high decomposition points of 245-290 °C; and, unlike conventional related compounds, promptly decompose at around their decomposition points. Thus, the styryl dyes of the present invention can be widely used in a variety of fields such as optical recording media, photochemical polymerizations, solar batteries and dyeings, which require dye compounds with the above characteristics. More particularly, they are very useful in high-density optical recording media such as DVD-Rs which use a visible light with a wavelength of shorter than 700 nm as writing- and reading lights, and more particularly a laser beam with a wavelength of 630-680 nm.

Particularly, when the styryl dyes of the present invention are used in high-speed-recordable-type optical recording media such as DVD-Rs, only styryl dyes positioned at the irradiated points decompose promptly and, unlike conventional related compounds, form prescribed pits without deforming the previously-formed pits near to the newly-formed pits by the conduction of fusion- and decomposition-heat to the part around the irradiated points. Accordingly, using the present styryl dyes, the prescribed pits can be easily and promptly formed on the limited recording surface of the optical recording media at a relatively-high-density. Conventional organic dye compounds, which have relatively-low melting points and decomposition points, on the other hand have the drawback that they tend to deform the parts around the previously formed pits and other pit-less parts, due to the accumulated heat generated when optical recording media are irradiated by reading lights, for reading information therefrom, for a relatively-long period of time. However, the styryl dyes of the present invention substantially do not cause such a problem because they have relatively-high decomposition points.

Furthermore, most of the styryl dyes have a satisfactorily-high solubility in organic solvents such as TFP, which are commonly used in the field of optical recording media, and this easily increases the product yield and the working efficiency for coating the styryl dyes over substances for optical recording media, and maintains the product quality and desired properties at a relatively-high level. The styryl dyes of the present invention have solubilities of over 10 mg/ml in TFP at 20 °C, and most of them have solubilities of over 20 mg/ml, and more preferably, over 50 mg/ml.

Explaining the uses of the styryl dyes of the present invention, for example, for optical recording media, they can be used for preparing optical recording media in accordance with the processes for conventional optical recording media because they do not require any special treatments and processings. For example, one or more of the styryl dyes of the present invention can be mixed with one or more other optical organic dye compounds with the properties of substantially absorbing visible light so as to modulate the reflection- and/or absorption-rate(s) in a recording layer, along with one or more light-resistant improvers, binders, dispersing agents, flame retardants, lubricants, antistatic agents, surfactants, thermal interference inhibitor, and plasticizers, if necessary or desirable. The resulting mixtures are then dissolved in organic solvents, and the solutions are homogeneously coated over the recording surface of substrates as a light absorbent either by spraying, soaking, roller coating, or rotatory coating methods; and dried to form thin layers as recording layers comprising light absorbents, and if necessary, followed by forming reflection layers to be closely attached on the recording layers by means of vacuum deposition, chemical vapor deposition, sputtering, or implanting method using metals and alloys such as gold, silver, copper, platinum, aluminum, cobalt, tin, nickel, iron, and chromium to impart a reflection efficiency of 45% or more, and preferably 55% or more; forming reflection layers to be closely attached on the recording layers by using commonly used materials for organic reflection layers; or coating over the recording layers ultraviolet hardening resins or thermosetting resins, which optionally contain flame retardants, stabilizers, and/or antistatic agents, to protect the recording layers from scratches, dust, spoils, etc., and then hardening the coatings by use of either irradiating light or heating to form protection layers to be tightly adhered on the reflection layers. In substrates with the recording-, reflection- and protection-layers formed as described above, each protection layer is attached together with adhesives or adhesive sheets, etc, or protective plates which are comprising the same materials and shapes as the substrates are attached to the protection layer of the substrate, if necessary or desirable.

As the other optional organic dye compounds usable in combination with the styryl dyes of the present invention, in optical recording media, any organic dye compounds can be used as long as they substantially absorb visible light and can modulate the light reflection- and absorption-rates of a recording layer of an optical recording medium in combination with the styryl dyes of the present invention. As the above organic dye compounds, the following compounds can be used in an appropriate combination, if necessary or desirable: Acridine dyes, azaannulene dyes, azo dyes, azo metal complex dyes, anthraquinone dyes, indigo dyes, indanthrene dyes, oxazine dyes, xanthene dyes, dioxazine dyes, thiazine dyes, thioindigo dyes, tetrapyrapolphyradine dyes, triphenylmethane dyes, triphenylthiazine dyes, naphthoquinone dyes, pyrromethene dyes, phthalocyanine dyes, benzoquinone dyes, benzopyran dyes, benzofuranone dyes, porphyrin dyes, rhodamine dyes in which the same or different rings are bound to both ends of a

polymethine chain such as monomethine, dimethine, trimethine, tetramethine, pentamethine, hexamethine, or heptamethine, and polymethine dyes such as cyanine dyes, merocyanine dyes, oxonol dyes, styryl dyes, azulenium dyes, squarylium dyes, pyrylium dyes, thiopyrylium dyes, or phenanthrene dyes.

The chains and rings of these optional dyes may have one or more substituents. Examples of such rings are imidazolin rings, imidazole rings, banzoimidazole rings, α -naphthimidazole rings, β -naphthimidazole rings, indole rings, isoindole rings, indolenine rings, isoindolenine rings, benzoindolenine rings, pyridinoindolenine rings, oxazoline rings, oxazole rings, isooxazole rings, benzooxazole rings, pyridinooxazole rings, α-naphthoxazole rings, β-naphthoxazole rings, selenazoline rings, selenazole rings, benzoselenazole rings, α-naphthselenazole rings, β-naphthselenazole rings, thiazoline rings, thiazole rings, isothiazole rings, benzothiazole rings, α -naphthothiazole rings, β -naphthothiazole rings, tellurazoline rings, tellurazole rings, benzotellurazole rings, α-naphthtellurazole rings, β -naphthtellurazole rings, acridine rings, anthracene rings, isoquinoline rings, isopyrrole rings, imidanoxaline rings, indandione rings, indazole rings, indaline rings, oxadiazole rings, carbazole rings, xanthine rings, quinazoline rings, quinoxaline rings, quinoline rings, chroman rings, cyclohexanedion rings, cyclopentandion rings, cinnoline rings, thiodiazole rings, thiooxazolidone rings, thiophene rings, thionaphthene rings, thiobarbituric acid rings, thiohydantoin rings, tetrazole rings, triazine rings, naphthalene rings, naphthyridine rings, piperazine rings, pyrazine rings, pyrazole rings, pyrazoline rings, pyrazolidine rings, pyrazolone rings, pyran rings, pyridine rings, pyridazine rings, pyrimidine rings, pyrylium rings, pyrrolidine rings, pyrroline rings, pyrrole rings, phenazine rings, phenanthridine rings, phenanthrene rings, phenanthroline rings, phthalazine rings, pteridine rings, furazane rings, furan rings, purine rings, benzene rings, benzoxazine rings, benzopyran rings, morpholine rings, and rhodanine rings.

As organic dye compounds used in combination with the styryl dyes of the present invention, those which have absorption maximum spectra in a visible region, particularly at a wavelength of 400-850 nm, are desirable when formed in a thin-layer. For example, cyanine dyes as disclosed in Japanese Patent Kokai No. 31,916/01, titled "Cyanine dyes" and PCT Kokai No. WO00/61, 687 (claiming for the priority based on Japanese Patent Application No. 81,541/00), titled "Cyanine dyes" and styryl dyes as disclosed in PCT Kokai No. WO01/19,923 (claiming for priority based on Japanese Patent Application No. 143,035/00), titled "Styryl dyes" applied for by the present applicant are very preferable.

As mentioned above, the styryl dyes of the present invention have extremely-high light resistance. Accordingly, when the styryl dyes are used in high-density optical recording media, unlike conventional polymethine dyes, there is no need to add a light-resistant improver as an essential element. However, the present invention does not substantially exclude cases using the styryl dyes in combination with appropriate light-resistant improvers, and one or more conventional light-resistant improvers may be used in combination with the styryl dyes, depending on uses. The light-resistant improvers which may optionally be used in the present invention are, for example, nitroso compounds such as nitrosodiphenylamine. nitrosoaniline, nitrosophenol, and nitrosonaphthol and metal complexes such as tetracyanoquinodimethane compounds, diimmonium compounds, and "NKX-1199" (bis[2'-chloro-3-methoxy-4-(2-methoxyethoxy)dithiobenzyl]nickel) produced by Hayashibara Biochemical Laboratories, Inc., Okayama, Japan, formazane metal complexes, and azo organic metal complexes, which all can be appropriately used in combination, if necessary or desirable.

Preferred optional light-resistant improvers are those which contain nitroso compounds, formazane metal compounds, or azo organic metal complexes. Examples of the nitroso compounds and formazane metal complexes are nitroso compounds which have a phenylpyridylamine skeleton as disclosed in Japanese Patent Kokai No. 344,750/00, titled "Phenylpyridylamine derivatives" applied for by the present applicant; and complexes with metals such as nickel, zinc, cobalt, iron, copper, and palladium, which have one or more formazane compounds of the aforesaid compounds as a ligand.

In the case of using such a light-resistant improver in combination, the styryl dyes of the present invention can be effectively prevented from undesirable changing, e.g. deterioration, fading, color changing, and quality changing, which are inducible by environmental lights such as reading- and natural-lights, without lowering the solubility of the styryl dyes in organic solvents and without substantially deteriorating preferable optical characteristics. As the composition ratio, 0.01-10 moles, and preferably, 0.05-5 moles of a light-resistant improver(s) can optionally be incorporated into one mole of the present styryl dye(s) as a light absorbent while increasing or decreasing the ratio.

The styryl dyes of the present invention have satisfactorily-high solubility in organic solvents without substantially causing problems for actual use, and do not substantially restrict the types of organic solvents used for coating the styryl dyes on substrates. Thus, in the preparation of optical recording media according to the present invention, appropriate organic solvents can be selected from the following ones which can optionally be appropriately used in combination: TFP frequently used to prepare optical recording media and the following organic solvents other than TFP: For example, hydrocarbons such as hexane, cyclohexane, methylcyclolhexane, dimethylcyclohexane, ethylcyclohexane, isopropylcyclohexane, *tert*-butylcyclohexane, octane, cyclooctane, benzene, toluene, and xylene; halogen compounds such as carbon tetrachloride, chloroform, 1,2-dichloroethane, 1,2-dibromoethane, trichloroethylene, tetrachloroethylene, chlorobenzene, bromobenzene, and α-dichlorobenzene; alcohols and phenols such as methanol,

ethanol, 2,2,2-trifluoroethanol, 2-methoxyethanol (methyl cellosolve), 2-ethoxyethanol (ethyl cellosolve), 2-isopropoxy-1-ethanol, 1-propanol, 2-propanol, 1-methoxy-2-propanol, 1-ethoxy-2-propanol, 1-butanol, 1-methxy-2-butanol, 3-methoxy-1-butanol, 4-methoxy-1-butanol, isobutyl alcohol, isopentyl alcohol, cyclohexanol, diethylene glycol, triethylene glycol, propylene glycol, glycerine, diacetone alcohol, phenol, benzyl alcohol, and cresol; ethers such as diethyl ether, diisopropyl ether, tetrahydrofuran, tetrahydropyran, 1,4-dioxane, anisole, 1,2-dimethoxyethane, diethylene glycol dimethyl ether, dicyclohexyl-18-crown-6, methylcarbinol, and ethylcarbitol; ketones such as furfural, acetone, 1,3-diacetylacetone, ethyl methyl ketone, and cyclohexanone; esters such as ethyl acetate, butyl acetate, ethylene carbonate, propylene carbonate, and trimethyl phosphate; amides such as formamide, N-methyl formamide, N,N-dimethylformamide, and hexamethylphosphoric triamide; nitriles such as acetonitrile, propionitrile, succinonitrile, and benzonitrile; nitro compounds such as nitromethane and nitrobenzene; amines such as ethylene diamine, pyridine, piperidine, morpholine, and N-methylpyrrolidone; and sulfur-containing compounds such as dimethylsulfoxide and sulfolane. These organic solvents can be used in an appropriate combination.

Particularly, the styryl dyes of the present invention have relatively-high solubilities in organic solvents which are easily volatilized, such as TFP, methyl cellosolve, ethyl cellosolve, and diacetone alcohol, and thus the styryl dyes are substantially free of crystallization when dissolved in the above organic solvents, spun coated on substrates, and then dried without substantially causing dye crystals and any inconsistency in the thickness and the surface quality of the layers formed on optical recording media. Most of the styryl dyes of the present invention exert desirable solubilities in non-halogen solvents, for example cellosolves such as methyl cellosolve and ethyl cellosolve, alcohols such as diacetone alcohol, and ketones such as ethyl methyl keton and cyclohexanone. When the styryl dyes of the present invention are dissolved in solvents such as cellosolves or alcohols before being coated onto the plastic substrates such as polycarbonate, the solvents do not damage the substrates and pollute the environment.

Conventional substrates can be used in the present invention, including those comprising suitable materials, for example, and processed into discs, e.g. 12 cm in diameter and 0.1-1.2 mm in thickness, to suit final use, by methods such as compression molding, injection molding, compression-injection molding, photopolymerization methods (the 2P method), the thermosetting integral method, and the lightsetting integral method. These discs can be used singularly or plurally after appropriately attaching them together with adhesive sheets or adhesive agents, etc. In principal, any materials useful for substrates can be used in the present invention as long as they are substantially transparent and have a transmissivity of at least 80%, and preferably at least 90% or more over the wavelengths ranging from 400 nm to 800 nm. Examples of such materials are glasses, some ceramics, and others such as plastics including polymethyl methacrylate, polycarbonate, polystyrene (styrene copolymer), polymethylpenten, polyetherimide, polyethersulfone, polyarylate, polycarbonate/polystyrene alloy, polyestercarbonate, polyphthalatecarbonate, polycarbonateacrylate, non-crystalline polyolefin, methacrylate copolymer, diallylcarbonatediethylene-glycol, and epoxy resin, where polycarbonate is most frequently used. In plastic substrates, concaves for expression of synchronizing signals and addresses of tracks and sectors are usually transferred to the internal circle of the tracks during their formation. The form of concaves is not specifically restricted and these are preferably formed to give 0.3-0.8 μm in average width and 70-200 nm in depth.

The styryl dyes of the present invention can be prepared into 0.5-5%(w/w) solutions of the organic solvents as mentioned above while considering the viscosity of the solutions, and then uniformly coated onto a substrate to form a dried recording layer of 10-1,000 nm, preferably, 50-500 nm in thickness. Prior to the coating of the dyes, a preliminary layer can be formed over the substrate to improve the protection and the adhesion-ability of the substrate, if necessary or desirable. Materials of the preliminary layer are, for example, high-molecular substances such as ionomer resins, polyamide resins, vinyl resins, natural resins, silicon, and liquid rubbers.

In the case of using binders together with the styryl dyes, the following polymers can be used alone or in combination in a weight ratio of 0.01-10 times of the styryl dye(s): Cellulose esters such as nitrocellulose, cellulose phosphate, cellulose sulfate, cellulose acetate, cellulose propionate, cellulose lactate, cellulose palmitate, and cellulose acetate/propionate; cellulose ethers such as methyl cellulose, ethyl cellulose, propyl cellulose, and butyl cellulose; vinyl resins such as polystyrene, poly(vinyl chloride), poly(vinyl acetate), poly(vinyl acetal), poly(vinyl butyral), poly (vinyl formal), poly(vinyl alcohol), and poly(vinyl pyrrolidone); copolymer resins such as styrene-butadiene copolymers, styrene-acrylonitrile copolymers, styrene-butadiene-acrylonitrile copolymers, vinyl chloride-vinyl acetate copolymers, and maleic anhydride copolymers; acrylic resins such as poly(methyl methacrylate), poly(methyl acrylate), polyacrylate, polymethacrylate, polyacrylamide, and polyacrylonitrile; polyesters such as poly(ethylene terephthalate); and polyolefins such as polyethylene, chlorinated polyethylene, and polypropylene.

Explaining the method of using the optical recording media according to the present invention, the high density optical recording media of the present invention such as DVD-Rs can write informations at a relatively-high density by using visible light with a wavelength shorter than 700 nm, more particularly a laser beam with a wavelength around 630-680 nm generated by semiconductor laser such as those of GaN, AlGaInP, GaAsP, GaAlAs, InGaP, InGaAsP or InGaAlP; or a Nd-YAG laser combined with a second harmonic generation inducing element (SHG element) such as a distributed feedback- and bragg-reflector types.

To read recorded informations, laser beams are used with wavelengths identical to or slightly longer or shorter than those having been used for writing the information.

As for the laser power for writing and reading informations, in the optical recording media of the present invention, such power is preferably set to a relatively-high level, which exceeds the threshold of the energy required for forming pits, when writing the information, while such power is preferably set to a relatively-low level, i.e., a level of below the threshold, when used in reading the previously recorded information, although the power levels can be varied depending on the types and ratios of the light-resistant improvers used in combination with the styryl dyes: Generally, the levels can be controlled to powers in the range of over 4 mW and under 50 mW for writing, and to powers of 0.1-4 mW for reading. The recorded information is read by detecting the changes of both the reflection light level and the transmission light level in the pits and the pit-less part on the surface of the optical recording media by the light pick-up method.

Accordingly, in the present optical recording media, stable and minute pits with a pit width of below 0.834 μm/pit (usually 0.4 μm/pit) and a track pitch of below 1.6 μm (usually 0.74μm) used commonly in a standard CD-R, can be promptly formed at a relatively-high density by a light pick-up using visible light with a wavelength of shorter than 700 nm, particularly, a laser beam with a wavelength around 630-680 nm. For example, in using a substrate, 12 cm in diameter, an extremely-high density optical recording medium with an optical recording capacity far exceeding 0.682 GB (giga bytes) (usually 4.7 GB) per one side can be realized, i.e. a recording capacity of about two hours of information of voices and images, the level of which could hardly be attained by conventional cyanine dyes.

Since the optical recording media of the present invention can record information of characters, images, voices, and other digital data at a relatively-high density, they are advantageously useful as recording media for professional and family use to record, backup, and keep documents, data, and computer software. Particular examples of the types of industries and the forms of information to which the optical recording media can be applied are as follows: entertainment including music; drawings of construction and engineering works, maps, ledgers of roads and rivers, aperture cards, architectural sketches, documents of disaster protection, wiring diagrams, arrangement plans, contents of newspapers and magazines, local information, and construction specifications, which all relate to construction and engineering works; blueprints, ingredient tables, prescriptions, product specifications, product price tables, parts lists, information for maintenance, case study files of accidents and problems, manuals for claims, production schemes, technical documents, sketches, details, company's house-made product files, technical reports, and analysis reports, which are all used in productions of various type; information of companies, records of stock prices, statistical documents, contracts, customers lists, documents of application/notification/licenses/authorization, and business reports, which are all used in finance; information of real property and transportation, sketches of construction, maps, and local information, which are all used for customers information for sales; diagrams of writings and pipe arrangements for electric and gas supplies, documents of disaster protection, tables of operation manuals, documents of investigations, and technical reports; medical records and reports, files of clinical histories and case studies, and diagrams for medical care/institution relationships; texts, collections of questions, educational documents, and statistical information, which are all used in private and preparatory schools; scientific papers, records in academic societies, monthly reports of research, research data, documentary records and indexes thereof, which are all used in universities, colleges, and research institutes; inspection data, literatures, patent publications, weather maps, analytical records of data, and customers files, which are all used for information purposes; case studies on laws; membership lists, history notes, records of works/products, competition data, and data of meetings/congresses, which include those of organizations/associations; sightseeing information and traffic information, which are all used for sightseeing; indexes of homemade publications, information of newspapers and magazines, who's who files, sport records, telop files, and scripts, which are all used in mass communications and publishing; and maps, ledgers of roads and rivers, fingerprint files, resident cards, documents of application/notification/license/authorization, statistical documents, and public documents, which are all used in government offices. Particularly, the write-once type optical recording media of the present invention can be advantageously useful for storing records of charts and official documents, and used as electronic libraries for art galleries, libraries, museums, broadcasting stations, etc.

As a rather specific use, the optical recording media of the present invention can be used to edit compact discs, digital video discs, laser discs, MD (a mini disc as an information recording system using photomagnetic disc), CDV (a laser disc using compact disc), DAT (an information recording system using magnetic tape), CD-ROM (a read-only memory using compact disc), DVD-RAM (a writable and readable memory using digital video disc), digital photos, movies, video software, audio software, computer graphics, publishing products, broadcasting programs, commercial messages, game software, etc.; and used as external program recording means for large size of computers and car navigation systems.

Hereinbefore described are the application examples of the styryl dyes of the present invention to the field of high-density optical recording media such as DVD-Rs which use visible lights with wavelengths of shorter than 700 nm as a writing light. However, in the field of optical recording media, the styryl dyes of the present invention can be also advantageously used as materials for changing or regulating the optical absorption rate or optical reflection rate

in the optical recording media such as commonly used CD-Rs and other high-density optical recording media by using in combination, for example, with one or more other organic dye compounds which substantially absorb a visible light with a wavelength of around 775-795 nm. When applied to optical recording media using a visible light with a wavelength of shorter than 700 nm as a writing light, the styryl dyes of the present invention can be used not to directly form pits on substrates but to indirectly form pits in such a manner that the excitation energy of a visible light with a wavelength of shorter than 700 nm is allowed to transfer to the aforesaid organic dye compounds via the styryl dyes by using the styryl dyes along with one or more other organic dye compounds which substantially absorb visible lights with a longer wavelength, e.g., a visible light with a wavelength around 775-795 nm, resulting in a decomposition of the organic dye compounds.

The optical recording media as referred to in the present invention mean optical recording media in general which use the characteristics of the styryl dyes of the present invention that substantially absorb a visible light with a wavelength shorter than 700 nm in addition to thermal-deformed optical recording media, thermal coloration method using the chemical reaction of coloring agents and developers using the heat generated when organic dye compounds absorb light, and the technique called "moth-eye type technique" which uses the phenomenon of the above-noted heat smooths the pattern of periodical unevenness provided on the surface of the substrates.

As described above, the styryl dyes of the present invention are useful as light-resistant improvers in recording media such as CD-Rs which have recording layers composed of cyanine dyes and use a visible light with a wavelength of over 700 nm but under 800 nm as a writing light, and usually use a laser beam with a wavelength around 775-795 nm. In optical recording media, the cyanine dyes used in combination with the styryl dyes of the present invention are, for example, pentamethine cyanine dyes in which the same or different 1H-benzo [e] indole skeleton or 3H-benzo [g] indole skeleton are bound to both ends of a pentamethine chain, as disclosed in Japanese Patent Kokai Nos. 203,692/91, 203,693/91, 239,149/93, and 199,045/94 and Japanese Patent Application No. 275,764/00, titled "Cyanine dyes" applied for by the same applicant as the present invention.

As an additive volume of the styryl dyes of the present invention to these cyanine dyes, the light resistance of the cyanine dyes is not desirably improved when the additive volume is at a relatively-low level, while electrical characteristic of optical recording media is deteriorated when the additive volume is at a relatively-high level. Usually, 0.5-50%(w/w), and preferably 3-30%(w/w) of the styryl dye(s) of the present invention based on the cyanine dye(s) can be appropriately incorporated into the cyanine dye(s).

As a light-resistant improver, one or more other light-resistant improvers can be used with the styryl dyes of the present invention, if necessary or desirable. For example, formazane metal complexes are more desirably used because they exert good amorphousness and relatively-high heat resistance to the styryl dyes of the present invention and the cyanine dyes when formed in a thin-layer.

When the styryl dyes of the present invention are used as a light-resistant improver in optical recording media such as CD-Rs which use a visible light with a wavelength of longer than 700 nm as the writing light, they are not necessarily incorporated into a recording layer. For example, the styryl dyes of the present invention can be incorporated into a preliminary layer with an appropriate binder, or dissolved in suitable solvents with one or more of the aforesaid binders, and the solutions are wholly or partly coated on the surface of the substrate to be irradiated by a writing light to form a protection membrane composed of the styryl dyes of the present invention, if necessary or desirable. The preliminary layer and the protection membrane can protect the recording layer from environmental lights such as natural- and artificial-lights and remarkably improve the durability of the optical recording media, and more particularly electrical characteristics such as jitter characteristic and an occurrence of block error. When the solutions are partly covered on substrates, informations such as characters, figures, pictures, numerals, and symbols can be printed or written on the outside of substrates by using the solutions as a printing material or paint.

Since the styryl dyes of the present invention substantially absorb visible light with a wavelength shorter than 700 nm, the light absorbents containing the styryl dyes of the present invention can be used in the aforesaid optical recording media and also used as materials for polymerizing polymerizable compounds by exposure to visible light, sensitizing solar batteries, materials for laser active substances in dye lasers, and for dying clothes in combination with one or more other organic dye compounds which are suited to substantially absorb visible light .

If necessary or desirable, in combination with one or more other light absorbents capable of absorbing light in ultraviolet, visible and/or infrared regions, the light absorbents can be used in clothes in general and others materials including building/bedding/decorating products such as drapes, lace, , print, casement cloth, roll screens, shutters, shop curtains, blankets, thick bedquilts including comforter, peripheral material for the thick bedquilts, covers for the thick bedquilts, cotton for the thick bedquilts, bed sheets, cushions, pillows, pillow covers, cushions, mats, carpets, sleeping bags, tents, interior finishes for cars, and window glass including car window glass; sanitary and health goods such as paper diapers, eyeglasses, monocles, and lorgnettes; internal base sheets, linings, and materials for shoes; wrappers; materials for umbrellas; parasols; stuffed toys; lighting devices; filters, panels and screens for information displaying devices such as televisions and personal computers which use cathode-ray tubes, liquid crystal displays, electrolytic luminous displays, and plasma displays; sunglasses; sunroofs; sun visors; pet bottles; refrigerators; vinyl

houses; lawns; optical fibers; prepaid cards; and windows in electric ovens, and other type ovens.

When used as wrapping materials, injection materials, and vessels for the above products, the light absorbents of the present invention prevent or reduce problems and discomforts caused by environmental lights such as natural- and artificial-lights or even minimize the above problems and discomforts. Furthermore, such dyes can advantageously regulate the color, tint, and appearance and control the light reflected by or passed through the products to a desirable color balance.

The following examples describe the preferred embodiments of the present invention:

Example 1

Styryl dye

Five hundred milliliters of acetonitrile were placed in a reaction vessel, mixed with 2.2 g of the styryl dye represented by Chemical Formula 37 and 3.4 g of the azo organic metal complex represented by Chemical Formula 38 which have light-resistance improving ability, and then the mixture was dissolved under heating conditions. The resulting mixture was reacted at 80 °C for one hour under stirring conditions. Thereafter, the reaction mixture was distilled to remove acetonitrile. The crystal formed was collected by filtration to obtain 3.3 g of a dark green crystal of the styryl dye of the present invention represented by Chemical Formula 1.

Chemical Formula 37:

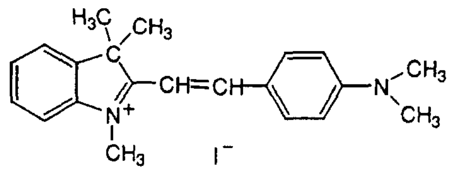

Chemical Formula 38:

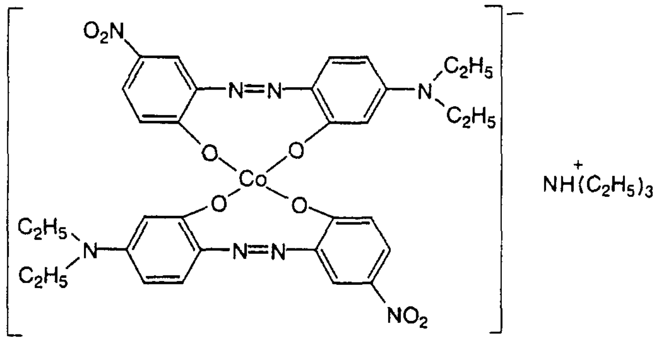

Example 2

Styryl dye

Three hundred milliliters of acetonitrile were placed in a reaction vessel, mixed with 2 g of the styryl dye represented by Chemical Formula 39 and 2.4 g of the azo organic metal complex represented by Chemical Formula 40 which have a light-resistance improving ability, and the reactants were then dissolved under heating conditions. The resulting mixture was reacted at 80 °C for one hour under stirring conditions. Thereafter, the reaction mixture was distilled to remove acetonitrile. The crystal formed was collected by filtration to obtain 2.4 g of a dark green crystal of the styryl dye of the present invention represented by Chemical Formula 14.

Chemical Formula 39:

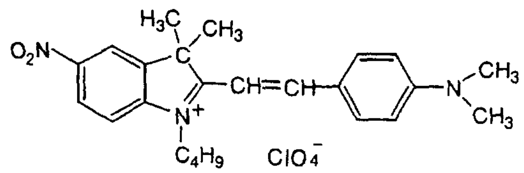

Chemical Formula 40:

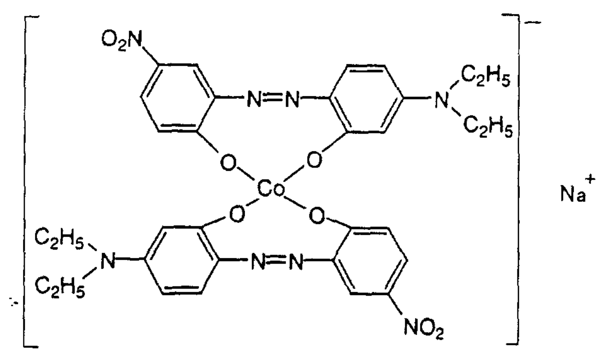

Example 3

Styryl dye

Three hundred milliliters of acetonitrile were placed in a reaction vessel, mixed with 1.5 g of the styryl dye represented by Chemical Formula 41 and 3.1 g of the azo organic metal complex represented by Chemical Formula 42 which have a light-resistance improving ability, and then the reactants were dissolved under heating conditions. The resulting mixture was reacted at 80 °C for one hour under stirring conditions. Thereafter, the reaction mixture was distilled to remove acetonitrile. The crystal formed was collected by filtration to obtain 1.8 g of a dark green crystal of the styryl dye of the present invention represented by Chemical Formula 2.

Chemical Formula 41:

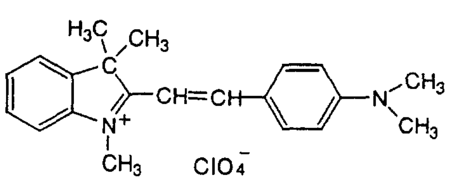

Chemical Formula 42:

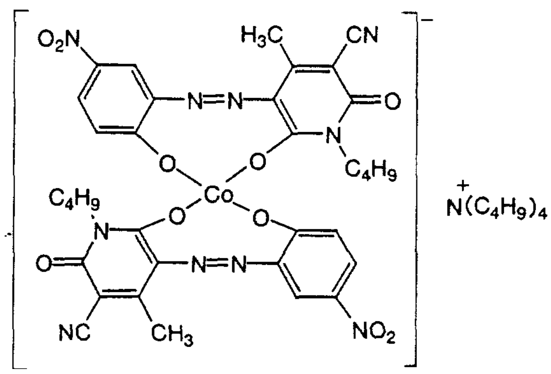

Example 4

Styryl dye

Three hundred milliliters of acetonitrile were placed in a reaction vessel, mixed with 2 g of the styryl dye represented by Chemical Formula 43 and 2.7 g of the azo organic metal complex represented by Chemical Formula 42 which have a light-resistance improving ability, and then the reactants were dissolved under heating conditions. The resulting mixture was reacted at 80 °C for one hour under stirring conditions. Thereafter, the reaction mixture was distilled to remove acetonitrile. The crystal formed was collected by filtration to obtain 1.4 g of a dark green crystal of the styryl dye of the present invention represented by Chemical Formula 35.

Chemical Formula 43:

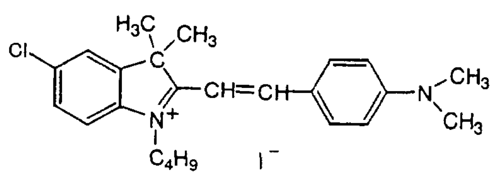

Although the production conditions and yields are varied in some degrees depending on the structures of the styryl dyes of the present invention, all the styryl dyes of the present invention, including the compounds represented by Chemical Formulae 1 to 36, can be produced by the methods in Examples 1 to 4 or in accordance therewith.

Example 5

Light absorption characteristic of styryl dye

The styryl dyes as listed in Table 1 of the present invention were measured for visible absorption spectra when dissolved in methanol and formed into layers over glass substrates. The obtained maximum absorption spectra under both conditions are tabulated in Table 1. FIGs. 1 and 2 show visible absorption spectra under both conditions of the styryl dye of the present invention represented by Chemical Formula 26 and the conventional related compound represented by Chemical Formula 44, respectively. The styryl dye represented by Chemical Formula 44 is a conventional related compound reported to be useful in high-density optical recording media.

Chemical Formula 44 (known compound):

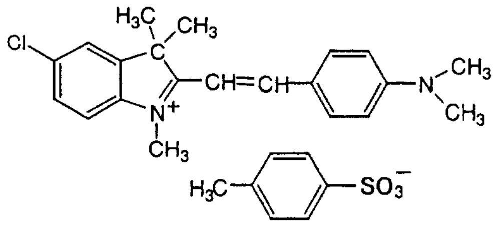

Table 1

| Styryl dye | Wavelength of Absorption maximum (nm) | | Melting point(℃) | Decomposition point(℃) | Solubility (mg/ml) | Remarks |
|---|---|---|---|---|---|---|
| | Solution | Thin layer | | | | |
| Chemical Formula 1 | 537 | 565 | ※ | 286.0 | 86.5 | Present invention |
| Chemical Formula 2 | 514 | 529 | ※ | 310.2 | 124.7 | Present invention |
| Chemical Formula 8 | 541 | 558,596 | ※ | 268.9 | 108.1 | Present invention |
| Chemical Formula 9 | 543,557 | 562,614 | 239.2 | 246.3 | 141.3 | Present invention |
| Chemical Formula 12 | 552 | 565,607 | ※ | 253.2 | 37.3 | Present invention |
| Chemical Formula 14 | 576 | 565,624 | ※ | 269.3 | 43.4 | Present invention |
| Chemical Formula 20 | 536 | 563 | 256.5 | 267.2 | 133.8 | Present invention |
| Chemical Formula 26 | 544 | 562 | 251.6 | 259.3 | 59.4 | Present invention |
| Chemical Formula 34 | 546 | 564 | ※ | 283.4 | 29.0 | Present invention |
| Chemical Formula 36 | 553 | 565 | ※ | 257.9 | 143.5 | Present invention |
| Chemical Formula 44 | 551 | 530 | 208.4 | 236.1 | not tested | Control |

Note : The symbol "※" means that it has no melting point or has a melting point undistinguishable from its decomposition point.

As shown in the absorption maxima of Table 1 and the visible absorption spectra of FIGs.1 and 2, all of the styryl dyes of the present invention measured have absorption maxima at wavelengths around 510-580 nm when dissolved in methanol similarly as in the conventional related compounds represented by Chemical Formula 44, and in visible region of wavelengths around 520-630 nm when formed in a thin-layer. These results showed that the styryl dyes of the present invention have a similar light absorption property as compared with conventional related compounds, in a united form with the styryl dyes and azo organic metal complexes, and that the present styryl dyes substantially absorb visible light with a wavelength of shorter than 700 nm in the absorption end of longer wavelength region of the absorption maximum, more particularly, a laser beam with a wavelength around 630-680 nm.

Example 6

Solubility of styryl dye

The styryl dyes in Table 1 were measured in a conventional manner for solubility in TFP at 20°C. The results are shown in Table 1, i.e. most of the styryl dyes of the present invention had solubilities over 10 mg/ml (more concretely, over 20 mg/ml) in TFP at 20°C, while the styryl dyes represented by Chemical Formula 1, 2, 8, 9, 20, 26, and 36 had solubilities up to 50 mg/ml or more. When coated on the substrate of optical recording media, polymethine dyes are usually prepared into solutions with concentrations of 0.5-5%(w/w). The fact that the styryl dyes of the present invention had relatively-high solubilities in TFP, which is frequently used in a preparation of optical recording media, shows that the styryl dyes can maintain the efficiency for producing optical recording media and the yield of products in a relatively-high level by using the styryl dyes in high-density optical recording media such as DVD-Rs.

Example 7

Thermal property of cyanine dye

An adequate amount of any one of the styryl dyes of the present invention in Table 1 as test specimens was placed in a vessel and subjected to conventional differential thermal analysis (hereinafter abbreviated as "DTA") and thermogravimetric analysis (hereinafter abbreviated as "TGA") using "MODEL TG/DTA 220", a digital thermo analyzer commercialized by Seiko Instruments Inc., Tokyo, Japan, to determine their melting points, i.e., temperatures at which the styryl dyes as test specimens begin to absorb heat on TGA, and decomposition points, i.e., temperatures at which the styryl dyes as test specimens begin to lose their weight on DTA. In parallel, the conventional related compound represented by Chemical Formula 44 was analyzed similarly as above. The results are also in Table 1. FIGs. 3 and 4 show the results of TGA and DTA of each, namely the styryl dye represented by Chemical Formula 26 of the present invention and the conventional related compound represented by Chemical Formula 44, respectively. In TGA and DTA, the environmental temperature was set to an increasing temperature mode at a rate of 10°C/min.

As shown in Table 1 and FIG. 4, the conventional related compound represented by Chemical Formula 44 had melting- and decomposition-points which are significantly separated from each other, and it is also shown that such compound very slowly decomposed at around the decomposition point. Most of the so-measured styryl dyes of the present invention promptly decomposed around the decomposition points. In particular, the styryl dyes represented by Chemical Formulae 1, 2, 8, 12, 14, 34, and 36 showed the steep resolvabilities which indicates that they decomposed with the reaching the decomposition points.

All the styryl dyes of the present invention measured had relatively-high decomposition points which were over 240 °C. The styryl dyes represented by Chemical Formulae 1, 2, and 34 had remarkably-high decomposition points which were up to 280 °C or more. Remarkably, the related compound represented by Chemical Formula 44 has separate melting- and decomposition-points and the points are separated each other and their changes of temperature were up to 28 °C, while most of the styryl dyes of the present invention measured had only decomposition points or the melting points which are substantially undistinguishable from the decomposition points. These results indicate that the styryl dyes of the present invention exceed related compounds in their desired thermal property.

As mentioned above, dyes which slowly decompose, for example the related compound represented by Chemical Formula 44, only form stable and minute pits in relatively-high density on the limited recording face in high-density optical recording media with substantially difficulty if at all. Depending on the glass transition temperature of the substrate, dyes with a relatively-low decomposition points when used as a light absorbent in optical recording media, can be generally used to write information by using a lower-power laser beam: however, as a drawback, when exposed to a laser beam for a relatively-long period of time on reading, such dyes tend to accumulate heat and deform parts around pits and other pitless parts on the recording surfaces, resulting in large jitters and reading errors.

On the other hand, the styryl dyes of the present invention substantially absorb a visible light with a wavelength of shorter than 700 nm when formed in a thin-layer, have only decomposition points, have relatively-high decomposition

points undistinguishable from their melting points, and have an a remarkably-high decomposition rate at around their decomposition points. These characteristic features indicate that high-density optical recording media, having a relatively-small jitter, insubstantial reading error, and satisfactory stability against exposure to environmental light such as reading- and natural-lights, can be obtained by using the styryl dyes of the present invention as a light absorbent.

Example 8

Light-resistance improvement of styryl dyes

Five milligrams (mg) of the styryl dye represented by Chemical Formula 26 as a test specimen was added to three milliliters (ml) of TFP, followed by 5-min ultrasonic energization at ambient temperature to dissolve the contents in the solvent. Thereafter, in the usual manner, a prescribed amount of the resulting solution was dropped on either surface of a polished glass substrate, 5 cm $\times$ 5 cm, while the glass substrate was rotated at a rotation rate of 1,000 rpm for one minute to uniformly coat the solution thereupon, and sequentially blown with hot air and cold air to dry the coated solution.

The resulting glass substrates coated with the styryl dyes were measured for transmittance ($T_0$) at a wavelength of 600 nm, and then exposed with light for 25 min using a 500 W xenon lamp. Immediately after that, the resulting substrates were remeasured for transmittance (T) at a wavelength of 600 nm, and the transmittance of T and $T_0$ dye were substrated for the Equation 1 to calculate the residual percentage (%). In parallel, control systems, which 15 (mg) of the conventional compound represented by Chemical Formula 44 was dissolved to TFP with or without two mg of the azo organic metal complex represented by Chemical Formula 38 as a light-resistant improver, were provided and treated similarly as above. The results were in Table 2.

Equation 1:

$$\text{Residual percentage of styryl dye(\%)} = \frac{100\text{-}T}{100\text{-}T_0} \times 100$$

Table 2

| Styryl dye | Light-resistant improver | Residual percentage of dye (%) | Remarks |
|---|---|---|---|
| Chemical Formula 26 | Combined with azo organic metal complex anion | 100 | Present invention |
| Chemical Formula 44 | Non | 3.2 | Control |
| Chemical Formula 44 | Addition of the azo organic metal complex, represented by Chemical Formula 38 | 89.5 | Control |

As shown by the results of Table 2, in the system with no azo organic metal complex, 97% of the styryl dye had changed with only 25-min exposure of light to be incapable of exerting its inherent light absorbent properties. While in the system with the styryl dyes of the present invention, the initial styryl dye still remained intact. In the systems with the styryl dye and the azo organic metal complex, the level of change of styryl dye was relatively low, but the residual percentage was up to about 89% and not equal to that of the styryl dye of the present invention. These results indicate that the styryl dyes of the present invention have outstanding light resistance and exert stable light absorbent properties in high-density optical recording media such as DVD-Rs.

Example 9

Optical recording medium

Either of the styryl dyes of the present invention listed in Table 1 as light absorbents were each added to TFP to give a concentration of 2.0%(w/w), and heated for a while, followed by ultrasonically dissolving the contents. Each of the resulting solutions was in a conventional manner filtrated by a membrane, homogeneously coated in a rotatory manner over one side of a polycarbonate disc substrate, 12 cm in diameter and 0.6 mm in thickness, to which had been transferred concaves for expressing synchronizing signals and addresses of tracks and sectors, to give a coating thickness of 120 nm. Thereafter, the substrate was spattered with gold to form a reflection layer, 100 nm in thickness, to be tightly adhered on the surface of the recording layer by such spattering, and the reflection layer in each use was homogeneously coated in a rotatory manner with "DAICURE CLEAR SD1700", as a known ultraviolet ray hardening resin commercialized by Dainippon Ink and Chemicals, Inc., Tokyo, Japan, and irradiated to form a protection layer to be tightly adhered on the surface of the reflection layer, followed by closely attaching and sticking a polycarbonate disc protection plate, 12 cm in diameter and 0.6 mm in thickness, on the surface of the protection layer to obtain a series of optical recording media.

All of the optical recording media of this Example have a recording capacity of over 4 GB and can write large amounts of information in the form of documents, images, voices, and digitals at a relatively-high density by using a laser element with an oscillation wavelength around 630-680 nm. Microscopic observation of the recorded surface of the optical recording media of this example, which had been written information by a semiconductor laser element with an oscillation wavelength of 658 nm, revealed that minute pits with a size of less than one μm/pit were formed at a track pitch of below one μm.

Example 10

Optical recording medium

The pentamethine cyanine dye represented by Chemical Formula 45 as a light absorbent was added to TFP to give a concentration of 2.0%(w/w), and there were further added the styryl dye of the present invention represented by Chemical Formula 2 and a nickel complex of the formazane compound represented by Chemical Formula 46 as a light resistant improver to give respective concentrations of 0.2 and 0.3%(w/w), respectively heated for a time, followed by ultrasonically dissolving the contents. The resulting solution was filtrated in a conventional manner by a membrane, homogeneously coated in a rotatory manner over one side of an injection molded polycarbonate disc substrate, 12 cm in diameter and 1.2 mm in thickness, to which had been transferred concaves for expressing synchronizing signals and addresses of tracks and sectors, to give a recording layer with a thickness of 120 nm. Thereafter, the substrate was spattered with gold to form a reflection layer, 100 nm in thickness, to be tightly adhered on the surface of the recording layer by such spattering, and the reflection layer was homogeneously coated in a rotatory manner with "DAICURE CLEAR SD1700", a known ultraviolet ray hardening resin commercialized by Dainippon Ink and Chemicals, Inc., Tokyo, Japan, and irradiated to form a protection layer tightly adhered on the surface of the reflection layer, resulting in obtaining optical recording media.

Chemical Formula 45:

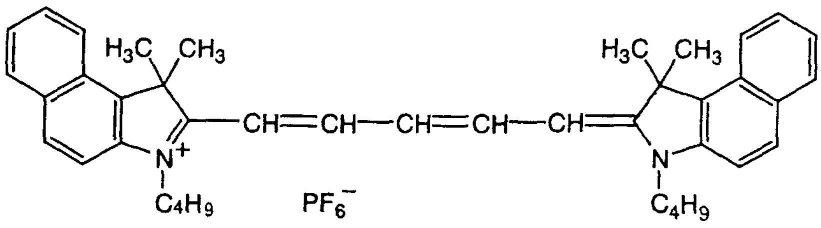

Chemical Formula 46:

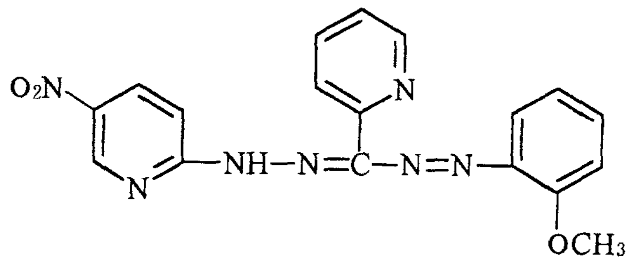

All of the optical recording media of this Example have a recording capacity of over 0.6 GB and can write large amounts of information in the form of documents, images, voices, and digitals at a relatively-high density by using a laser device with an oscillation wavelength around 775-795 nm. Microscopic observation of the recorded surface of the optical recording media of this example, which had been written information by a semiconductor laser element with an oscillation wavelength of 785 nm, revealed that minute pits with a size of less than one µm/pit were formed at a track pitch of below one µm.

Example 11

Optical recording medium

Each of the styryl dyes represented by Chemical Formula 1, 2, 14, or 35 and a conventional polyacrylate binder were added to TFP to give respective concentrations of 0.1%(w/w), and each of the mixture was dissolved. Optical recording media were prepared similarly as in Example 10 except for omitting the styryl dyes represented by Chemical Formulae 2 and 46 and the nickel complex of formazane compound as a light resistant improver. Successively, four types of optical recording media with protection layers including the styryl dyes of the present invention were obtained by homogeneously coating the above prepared TFP solution, which includes the styryl dye and a polyacrylate binder, in a rotatory manner over outside of the substrate.

All of the optical recording media of this Example have a recording capacity of over 0.6 GB and can write large amounts of information in the form of documents, images, voices, and digitals at a relatively-high density by using a laser element with an oscillation wavelength around 775-795 nm. In parallel, an optical recording medium except for the styryl dye in a protection layer as a control was prepared. It was in a conventional manner written with test signals of a square wave pattern together with the optical recording media of this Example, was exposed to an artificial light with a wavelength of 660 nm (0.5 mW/$cm^2$) for 24 hours, and then was measured their electrical properties. As a result, the recording media with protection layers including the styryl dye were superior in all electrical properties in comparison with a control. As to a rate of block error as an index for reading error, a control had a block error of 4,000 cps, while the recording media of this Example had an about 500 cps as low as 1/8 of that of the control.

As described above, the present invention was made based on the creation of novel styryl dyes and the findings of their industrially usable characteristics. The styryl dyes substantially absorb visible light with a wavelength

of shorter than 700 nm when formed in a thin-layer and have relatively-high light resistance and relatively-high solubilities in various organic solvents. In addition, most of the styryl dyes of the present invention have only decomposition points or relatively-high decomposition points which are undistinguishable from their melting points, and steeply decompose at around their decomposition points. Accordingly, the styryl dyes of the present invention have diversified uses in the fields of optical recording media, photochemical polymerization, solar batteries, dyeing, etc., which otherwise need organic dye compounds having such properties, particularly in the field of optical recording media, i.e. the present styryl dyes are very useful as a light absorbent in high-density optical recording media such as DVD-Rs in which stable and minute pits be promptly formed on a restricted recording surface at a relatively-high density in writing information.

As compared with optical recording media now used such as CD-Rs which write information using a laser beam with a wavelength of around 775 nm or 795 nm, the high-density optical recording media according to the present invention, which write information by using a visible light with a wavelength shorter than 700 nm, can promptly form stable and minute pits at a relatively-narrower track pitch and a relatively-high density, and can record a vast amount of information of characters, images, voices, and other digital data at a relatively-high density, resulting in greatly lowering the cost of recording information per bit a merit.

Since the styryl dyes of the present invention remarkably improve the light resistance of cyanine dyes without substantially absorbing a visible light with wavelengths of longer than 700 nm, they can also be advantageously used as light-resistant improvers, for example, in CD-Rs, and more particularly, high-speed writable CD-Rs now commercially available which have recording layers composed of cyanine dyes that substantially absorb a visible light with a wavelength of longer than 700 nm and need a laser beam with a wavelength of around 775-795 nm as a writing light.

The styryl dyes with such useful properties can be easily obtained in a desirable amount by the process of the present invention which comprises a step of reacting a compound, which give a cation of styryl dye binding an indolenin-ring at one end of a dimethine chain, with a compound which give an anion of azo organic metal complex.

The present invention having such outstanding effects and functions is a significant invention that will greatly contribute to this art.

## Claims

1. A styryl dye represented by Formula 1, which substantially absorbs a visible light with a wavelength of shorter than 700 nm when formed in a thin-layer and has solubility of over 10 mg/ml in 2,2,3,3-tetrafluoro-1-propanol at 20 °C.

Formula 1:

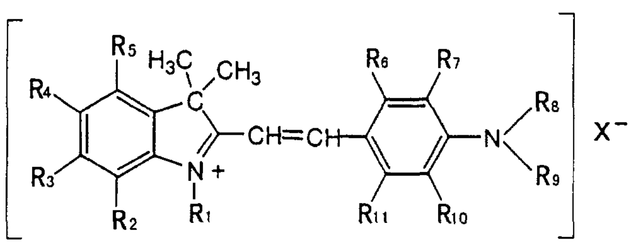

wherein, $R_1$ and $R_{11}$ independently represent hydrogen or an appropriate substituent, and $X^-$ represents a counter ion by negatively-charged azo organic metal complex.

2. The styryl dye of claim 1, wherein said azo organic metal complex has light-resistance improving ability.

3. The styryl dye of claim 1 or 2, which has no melting point or has a melting point undistinguishable from its decomposition point.

4. The styryl dye of claim 1, 2 or 3, which has a decomposition point of over 240 °C.

5. A light absorbent comprising the styryl dye of any one of claims 1 to 4 and at least one other component.

6. The light absorbent of claim 5, which further contains one or more other organic dye compounds that substantially absorb a visible light.

7. The light absorbent of claim 5, which further contains one or more compatible light-resistant improvers.

8. The light absorbent of claim 5, which is sensitive to a visible light with a wavelength of shorter than 700 nm when formed in a thin-layer.

9. A light-resistant improver comprising the styryl dye of any one of claims 1 to 4.

10. The light-resistant improver of claim 9, which is useful in an optical recording medium which uses a visible light with a wavelength of around 775-795 nm as a writing light.

11. An optical recording medium comprising the styryl dye of any one of claims 1 to 4.

12. The optical recording medium of claim 11, which further contains one or more other organic dye compounds that substantially absorb a visible light.

13. The optical recording medium of claim 11, which further contains one or more compatible light-resistant improvers.

14. The optical recording medium of claim 11, which uses a visible light with a wavelength of shorter than 800 nm as a writing light.

15. A process for producing the styryl dye of any one of claims 1 to 4, comprising a step of reacting a compound, which gives a cation of styryl dye corresponding to Formula 1, with a compound which gives an anion of azo organic metal complex.

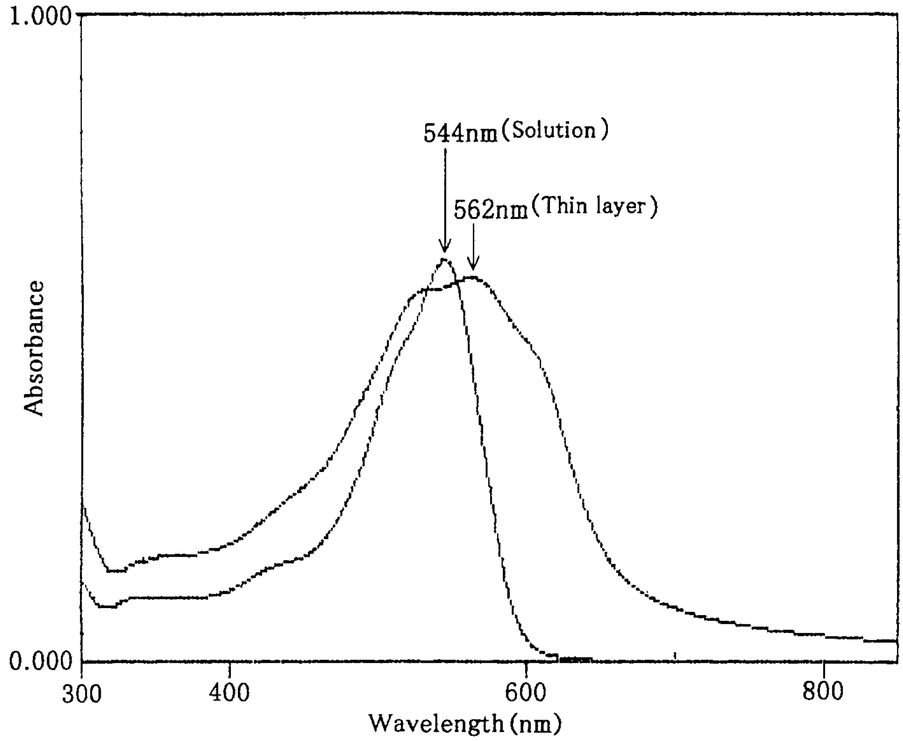
1.000
0.000
Absorbance
544nm (Solution)
562nm (Thin layer)
300
400
600
800
Wavelength (nm)

FIG.1

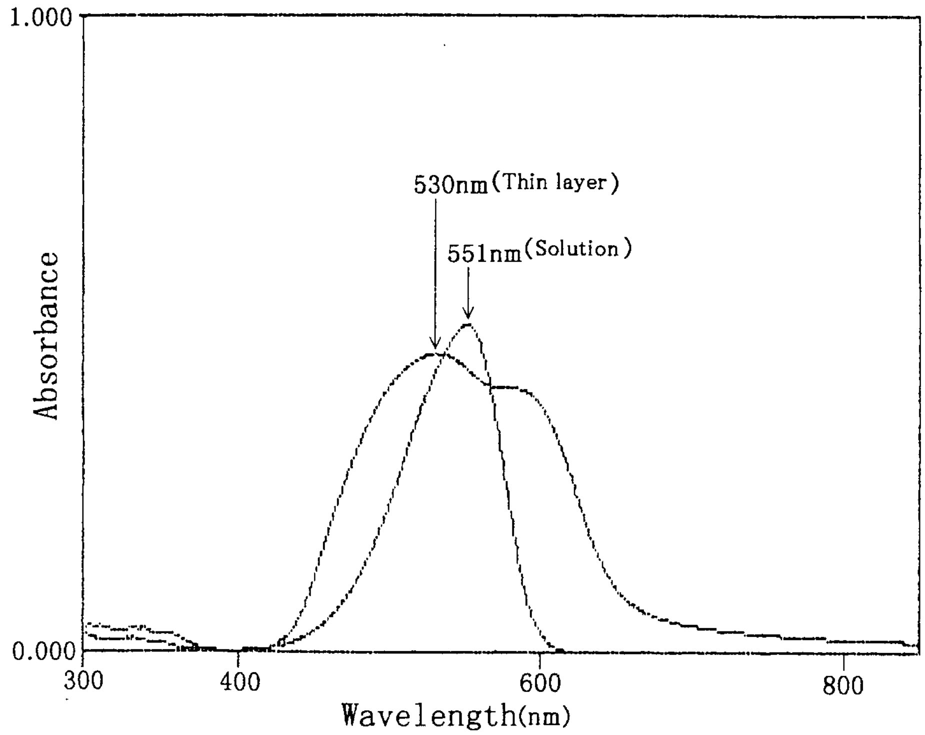
1.000
0.000
Absorbance
530nm (Thin layer)
551nm (Solution)
300
400
600
800
Wavelength(nm)

FIG.2

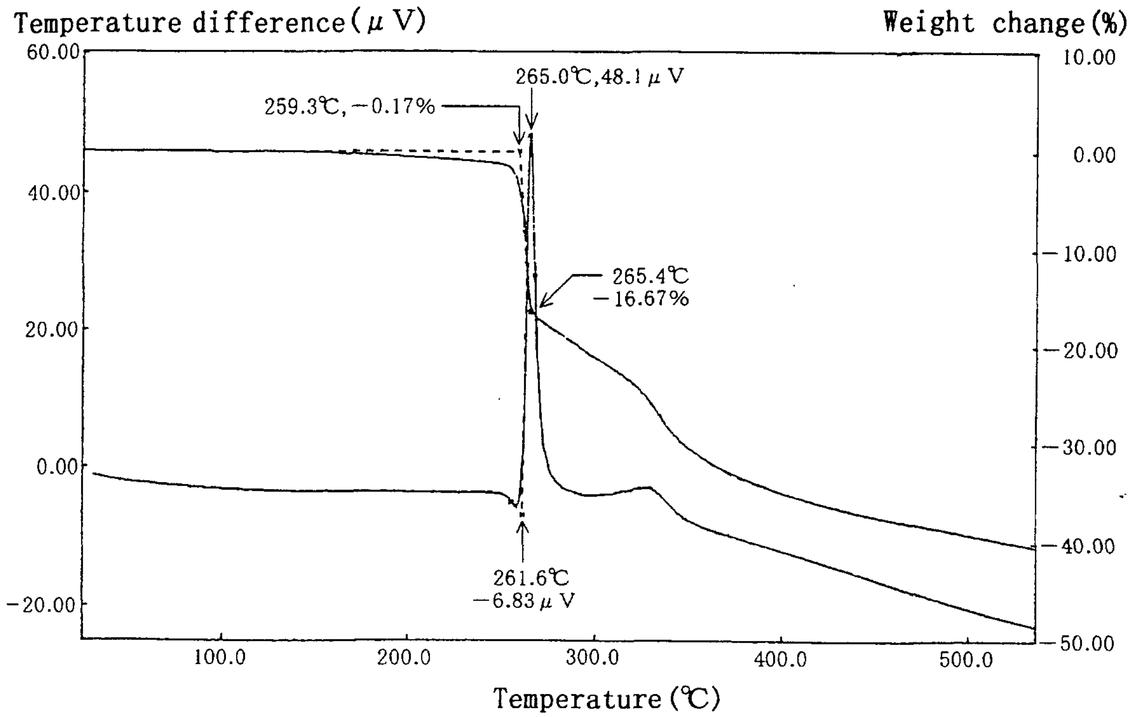
Temperature difference(μV)
Weight change(%)
265.0℃,48.1μV
259.3℃,−0.17%
265.4℃
−16.67%
261.6℃
−6.83μV
60.00
40.00
20.00
0.00
−20.00
10.00
0.00
−10.00
−20.00
−30.00
−40.00
−50.00
100.0
200.0
300.0
400.0
500.0
Temperature(℃)

FIG.3

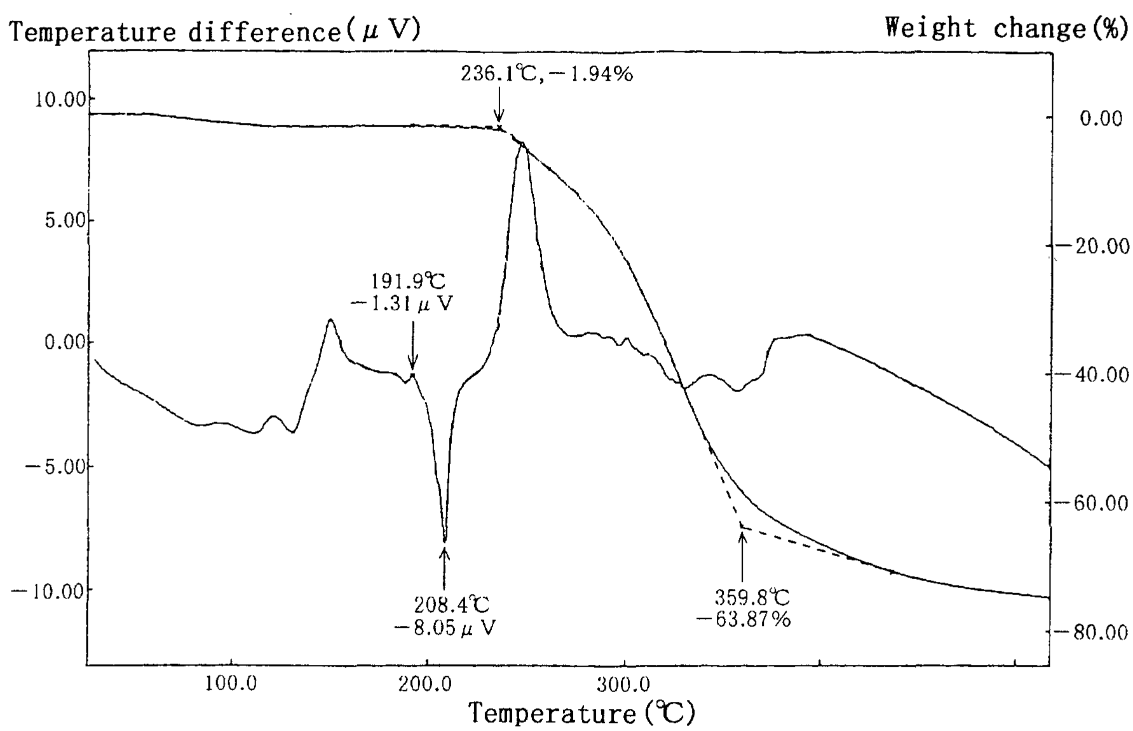
Temperature difference(μV)
Weight change(%)
236.1℃,−1.94%
191.9℃
−1.31μV
208.4℃
−8.05μV
359.8℃
−63.87%
10.00
5.00
0.00
−5.00
−10.00
0.00
−20.00
−40.00
−60.00
−80.00
100.0
200.0
300.0
Temperature(℃)

FIG.4